# EUROPEAN PATENT APPLICATION

(11) **EP 4 842 133 A1**
(43) Date of publication of application: **18.11.2026**
(21) Application number: 24917138.0
(22) Date of filing: 12.11.2024
(51) Int. Cl.: H04W 76/10, H04W 4/06, H04W 40/20, H04W 84/06

(54) **TERMINAL DEVICE, METHOD, AND INTEGRATED CIRCUIT**

(30) Priority: 09.01.2024 JP 2024001049
(71) Applicant: Sharp Kabushiki Kaisha, Sakai City, Osaka 590-8522 (JP)
(72) Inventor: TSUBOI Hidekazu, Sakai City, Osaka 590-8522 (JP); YAMADA Shohei, Sakai City, Osaka 590-8522 (JP); INOUE Kyosuke, Sakai City, Osaka 590-8522 (JP); KAWANO Takuma, Sakai City, Osaka 590-8522 (JP); MIYAKE Taichi, Sakai City, Osaka 590-8522 (JP); NOMURA Takaki, Sakai City, Osaka 590-8522 (JP)
(74) Representative: Müller Hoffmann & Partner
(86) International application number: PCT/JP2024/040155
(87) International publication number: WO 2025/150264

(57) **Abstract**

A terminal apparatus for communicating with a base station apparatus includes a receiver configured to receive control information about one or multiple multicast broadcast services (MBSs) provided in a cell of the base station apparatus and one or multiple pieces of area information, and a processing unit, wherein the control information includes information associating some or all of MBS sessions with the one or multiple pieces of area information, each piece of the area information is information indicating some or all of areas of the cell, and the processing unit determines that, among one or multiple of the MBS sessions, an MBS session not associated with any piece of the area information and an MBS session associated with the area information indicating an area where the terminal apparatus is located are MBS sessions allowed to be received, and performs a broadcast MRB configuration procedure to start receiving an MBS session of the MBS sessions determined to be allowed to be received.

## Description

### Technical Field

The present invention relates to a terminal apparatus, a method, and an integrated circuit.

This application claims priority to Japanese patent application No. 2024-001049, filed in Japan on January 9, 2024, the contents of which are incorporated herein by reference.

### Background Art

In the 3rd Generation Partnership Project (3GPP) being a standardization project for cellular mobile communication systems, technical study and standardization are being carried out regarding cellular mobile communication systems including radio access, core networks, and services.

For example, technical study and standardization of Evolved Universal Terrestrial Radio Access (E-UTRA) have begun in the 3GPP as a Radio Access Technology (RAT) for cellular mobile communication systems for the 3.9th generation and the 4th generation. Technical study and standardization of enhanced technology of E-UTRA are still carried out in the 3GPP. Note that E-UTRA may also be referred to as Long TermEvolution (LTE: trade name), and its enhanced technology may also be referred to as LTE-Advanced (LTE-A) and LTE-Advanced Pro (LTE-A Pro).

Technical study and standardization of New Radio or NR Radio access (NR) have begun in the 3GPP as a Radio Access Technology (RAT) for cellular mobile communication systems for the 5th Generation (5G). Technical study and standardization of enhanced technology of NR are still carried out in the 3GPP.

### Citation List

### Non Patent Literature

NPL 1: 3GPP TS 38.331 v17.0.0, "Evolved Universal Terrestrial Radio Access (E-UTRA); Radio Resource Control (RRC); Protocol specifications" pp. 70-116, pp. 218-223, pp. 316-1107

### Summary of Invention

### Technical Problem

In 3GPP, as an enhanced technology of NR, a study is underway to provide a multicast/broadcast service in a study of a non-terrestrial network (NTN), but since a size of one cell provided by a satellite is larger than that of a cell of a terrestrial network, it may be difficult to provide a broadcast service to a specific area (for example, within a country or a state).

An aspect of the present invention is made in view of the circumstances described above, and has an object to provide a terminal apparatus, a base station apparatus, a communication method, and an integrated circuit capable of efficiently providing a multicast/broadcast service.

### Solution to Problem

In order to accomplish the object described above, an aspect of the present invention is contrived to provide the following means. Specifically, an aspect of the present invention is a terminal apparatus for communicating with a base station apparatus, the terminal apparatus including a receiver configured to receive control information about one or multiple multicast broadcast services (MBSs) provided in a cell of the base station apparatus and one or multiple pieces of area information, and a processing unit, wherein the control information includes information associating some or all of MBS sessions with the one or multiple pieces of area information, each piece of the area information is information indicating some or all of areas of the cell, and the processing unit determines that, among one or multiple of the MBS sessions, an MBS session not associated with any piece of the area information and an MBS session associated with the area information indicating an area where the terminal apparatus is located are MBS sessions allowed to be received, and performs a broadcast MRB configuration procedure to start receiving an MBS session of the MBS sessions determined to be allowed to be received.

An aspect of the present invention is a method applied to a terminal apparatus for communicating with a base station apparatus, the method including receiving control information about one or multiple multicast broadcast services (MBSs) provided in a cell of the base station apparatus and one or multiple pieces of area information, wherein the control information includes information associating some or all of MBS sessions with the one or multiple pieces of area information, each piece of the area information is information indicating some or all of areas of the cell, among one or multiple of the MBS sessions, an MBS session not associated with any piece of the area information and an MBS session associated with the area information indicating an area where the terminal apparatus is located are determined to be MBS sessions allowed to be received, and a broadcast MRB configuration procedure is performed to start receiving an MBS session of the MBS sessions determined to be allowed to be received.

An aspect of the present invention is an integrated circuit mounted on a terminal apparatus for communicating with a base station apparatus, the integrated circuit causing the terminal apparatus to perform a function of receiving control information about one or multiple multicast broadcast services (MBSs) provided in a cell of the base station apparatus and one or multiple pieces of area information, wherein the control information includes information associating some or all of MBS sessions with the one or multiple pieces of area information, each piece of the area information is information indicating some or all of areas of the cell, among one or multiple of the MBS sessions, an MBS session not associated with any piece of the area information and an MBS session associated with the area information indicating an area where the terminal apparatus is located are determined to be MBS sessions allowed to be received, and a broadcast MRB configuration procedure is performed to start receiving an MBS session of the MBS sessions determined to be allowed to be received.

Note that these comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Advantageous Effect of Invention

According to an aspect of the present invention, the terminal apparatus, the method, and the integrated circuit can implement efficient communication control processing.

### Brief Description of Drawings

FIG. 1 is a schematic diagram of a communication system according to the present embodiment.
FIG. 2 is a diagram of an example of an E-UTRA protocol architecture according to the present embodiment.
FIG. 3 is a diagram of an example of an NR protocol architecture according to the present embodiment.
FIG. 4 is a diagram illustrating an example of a flow of a procedure for various configurations in an RRC according to the present embodiment.
FIG. 5 is a block diagram illustrating a configuration of a terminal apparatus according to the present embodiment.
FIG. 6 is a block diagram illustrating a configuration of a base station apparatus according to the present embodiment.
FIG. 7 is an example of processing according to the present embodiment.
FIG. 8 is an example of an ASN.1 notation of area information according to the present embodiment.
FIG. 9 is an example of an ASN.1 notation of a system information block according to the present embodiment.
FIG. 10 is an example of an ASN.1 notation of an MBS broadcast configuration according to the present embodiment.

### Description of Embodiment

The present embodiment will be described below in detail with reference to the drawings.

LTE (and LTE-A, LTE-A Pro) and NR may be defined as different Radio Access Technologies (RATs). LTE that is connectible to NR by using Multi-Radio Dual Connectivity (MR-DC) may be distinguished from existing LTE. LTE using a 5GC as a Core Network (CN) may be distinguished from existing LTE using an EPC as a core network. Note that existing LTE may refer to LTE in which a technology standardized in release 15 or later versions of 3GPP is not implemented. The present embodiment may be applied to the NR, the LTE and other RATs. Terms associated with LTE and NR are used in the following description. However, the present embodiment may be applied to technologies using other terms and/or other radio access technologies. In the present embodiment, the term "E-UTRA" and the term "LTE" may be interchangeably interpreted.

Note that, in the present embodiment, names of each node and entity, processing in each node and entity, and the like in a case that the radio access technology is E-UTRA or NR are described. However, the present embodiment may be applied to other radio access technologies. In the present embodiment, the names of each node and entity and names of parameters and messages may be different from those in the description of the present embodiment.

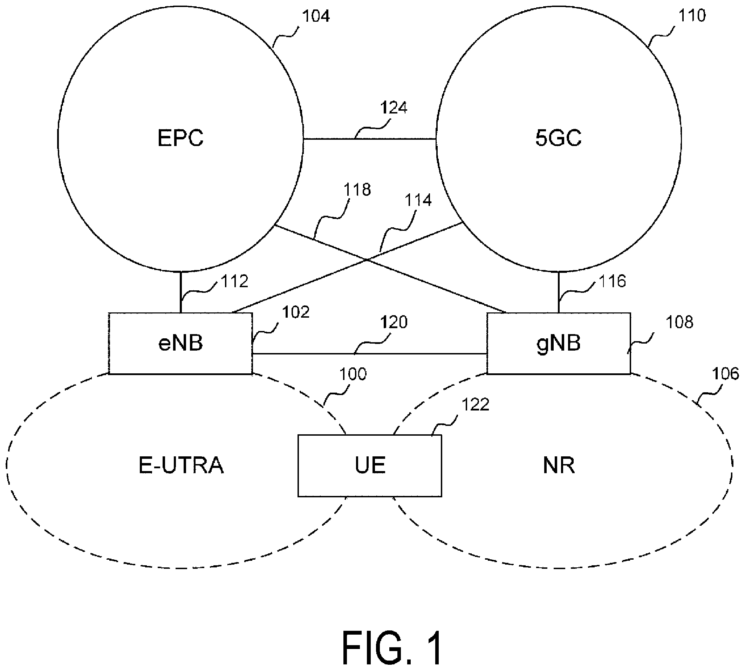

FIG. 1 is a schematic diagram of a communication system according to the present embodiment. Note that functions such as each node, radio access technology, core network, and interface to be described with reference to FIG. 1 are a part of functions closely related to the present embodiment, and other functions may be provided.

E-UTRA 100 may be a radio access technology. The E-UTRA 100 may be an air interface between a UE 122 and an eNB 102. The air interface between the UE 122 and the eNB 102 may be referred to as a Uu interface. The E-UTRAN Node B (eNB) 102 may be a base station apparatus of the E-UTRA 100. The eNB 102 may have an E-UTRA protocol to be described below. The E-UTRA protocol may include an E-UTRA User Plane (UP) protocol to be described below and an E-UTRA Control Plane (CP) protocol to be described below. The eNB 102 may terminate the E-UTRA User Plane (UP) protocol and the E-UTRA Control Plane (CP) protocol for the UE 122. A radio access network including the eNB may be referred to as an E-UTRAN.

An Evolved Packet Core (EPC) 104 may be a core network. An interface 112 is an interface between the eNB 102 and the EPC 104, and may be referred to as an S1 interface. The interface 112 may include a control plane interface through which a control signal passes and/or a user plane interface through which user data passes. The control plane interface of the interface 112 may be terminated in a Mobility Management Entity (MME) (not illustrated) in the EPC 104. The user plane interface of the interface 112 may be terminated in a serving gateway (S-GW) (not illustrated) in the EPC 104. The control plane interface of the interface 112 may be referred to as an S1-MME interface. The user plane interface of the interface 112 may be referred to as an S1-U interface.

Note that one or multiple eNBs 102 may be connected to the EPC 104 via the interface 112. Among the multiple eNBs 102 connected to the EPC 104, an interface may be present (not illustrated). The interface among the multiple eNBs 102 connected to the EPC 104 may be referred to as an X2 interface.

NR 106 may be a radio access technology. The NR 106 may be an air interface between the UE 122 and a gNB 108. The air interface between the UE 122 and the gNB 108 may be referred to as a Uu interface. The g Node B (gNB) 108 may be a base station apparatus of the NR 106. The gNB 108 may have an NR protocol to be described below. The NR protocol may include an NR User Plane (UP) protocol to be described below and an NR Control Plane (CP) protocol to be described below. The gNB 108 may terminate the NR User Plane (UP) protocol and the NR Control Plane (CP) protocol for the UE 122.

A 5GC 110 may be a core network. An interface 116 is an interface between the gNB 108 and the 5GC 110, and may be referred to as an NG interface. The interface 116 may include a control plane interface through which a control signal passes and/or a user plane interface through which user data passes. The control plane interface of the interface 116 may be terminated in an Access and mobility Management Function (AMF) (not illustrated) in the 5GC 110. The user plane interface of the interface 116 may be terminated in a User Plane Function (UPF) (not illustrated) in the 5GC 110. The control plane interface of the interface 116 may be referred to as an NG-C interface. The user plane interface of the interface 116 may be referred to as an NG-U interface.

Note that one or multiple gNBs 108 may be connected to the 5GC 110 via the interface 116. Among the multiple gNBs 108 connected to the 5GC 110, an interface may be present (not illustrated). The interface among the multiple gNBs 108 connected to the 5GC 110 may be referred to as an Xn interface.

The eNB 102 may have a function of connecting to the 5GC 110. The eNB 102 having the function of connecting to the 5GC 110 may be referred to as an ng-eNB. An interface 114 is an interface between the eNB 102 and the 5GC 110, and may be referred to as an NG interface. The interface 114 may include a control plane interface through which a control signal passes and/or a user plane interface through which user data passes. The control plane interface of the interface 114 may be terminated in an AMF in the 5GC 110. The user plane interface of the interface 114 may be terminated in a UPF in the 5GC 110. The control plane interface of the interface 114 may be referred to as an NG-C interface. The user plane interface of the interface 114 may be referred to as an NG-U interface. A radio access network including the ng-eNB or the gNB may be referred to as an NG-RAN. The NG-RAN, the E-UTRAN, or the like may be simply referred to as a network. The network may include an eNB, an ng-eNB, a gNB, and the like.

Note that one or multiple eNBs 102 may be connected to the 5GC 110 via the interface 114. Among the multiple eNBs 102 connected to the 5GC 110, an interface may be present (not illustrated). The interface among the multiple eNBs 102 connected to the 5GC 110 may be referred to as an Xn interface. The eNB 102 connected to the 5GC 110 and the gNB 108 connected to the 5GC 110 may be connected with an interface 120. The interface 120 between the eNB 102 connected to the 5GC 110 and the gNB 108 connected to the 5GC 110 may be referred to as an Xn interface.

The gNB 108 may have a function of connecting to the EPC 104. The gNB 108 having the function of connecting to the EPC 104 may be referred to as an en-gNB. An interface 118 is an interface between the gNB 108 and the EPC 104, and may be referred to as an S1 interface. The interface 118 may include a user plane interface through which user data passes. The user plane interface of the interface 118 may be terminated in an S-GW (not illustrated) in the EPC 104. The user plane interface of the interface 118 may be referred to as an S1-U interface. The eNB 102 connected to the EPC 104 and the gNB 108 connected to the EPC 104 may be connected with the interface 120. The interface 120 between the eNB 102 connected to the EPC 104 and the gNB 108 connected to the EPC 104 may be referred to as an X2 interface.

An interface 124 is an interface between the EPC 104 and the 5GC 110, and may be an interface that allows only the CP, only the UP, or both of the CP and the UP to pass therethrough. Some or all of the interfaces out of the interface 114, the interface 116, the interface 118, the interface 120, the interface 124, and the like may be absent depending on a communication system provided by a communication provider or the like.

The UE 122 may be a terminal apparatus that can receive system information and a paging message transmitted from the eNB 102 and/or the gNB 108. The UE 122 may be a terminal apparatus that can perform radio connection with the eNB 102 and/or the gNB 108. The UE 122 may be a terminal apparatus that can simultaneously establish a radio connection to the eNB 102 and a radio connection to the gNB 108. The UE 122 may have the E-UTRA protocol and/or the NR protocol. Note that the radio connection may be Radio Resource Control (RRC) connection.

The UE 122 may be a terminal apparatus that can connect to the EPC 104 and/or the 5GC 110 via the eNB 102 and/or the gNB 108. In a case that a connection destination core network of the eNB 102 and/or the gNB 108 with which the UE 122 performs communication is the EPC 104, each Data Radio Bearer (DRB) described below and established between the UE 122 and the eNB 102 and/or the gNB 108 may further be uniquely linked with each Evolved Packet System (EPS) bearer passing through the EPC 104. Each EPS bearer may be identified with an EPS bearer identity (Identity or ID). The same QoS may be secured for data, such as an IP packet and an Ethernet (trade name) frame, which passes through the same EPS bearer.

In a case that the connection destination core network of the eNB 102 and/or the gNB 108 with which the UE 122 performs communication is the 5GC 110, each DRB established between the UE 122 and the eNB 102 and/or the gNB 108 may further be associated with one of Packet Data Unit (PDU) sessions established in the 5GC 110. Each PDU session may include one or multiple QoS flows. Each DRB may be mapped to one or multiple QoS flows, or may be mapped to none of the QoS flows. Each PDU session may be identified with a PDU session identity (Identity, or ID). Each QoS flow may be identified with a QoS flow identity (Identity, or ID). The QoS may be secured for data, such as an IP packet and an Ethernet frame, which passes through the same QoS flow.

The EPC 104 may not include the PDU session(s) and/or the QoS flow(s). The 5GC 110 may not include the EPS bearer(s). In a case that the UE 122 is connected to the EPC 104, the UE 122 may have information of the EPS bearer(s) but may not have information in the PDU session(s) and/or the QoS flow(s). In a case that the UE 122 is connected to the 5GC 110, the UE 122 may have information in the PDU session(s) and/or the QoS flow(s) but may not have information of the EPS bearer(s).

Note that, in the following description, the eNB 102 and/or the gNB 108 is also simply referred to as a base station apparatus, and the UE 122 is also simply referred to as a terminal apparatus or a UE.

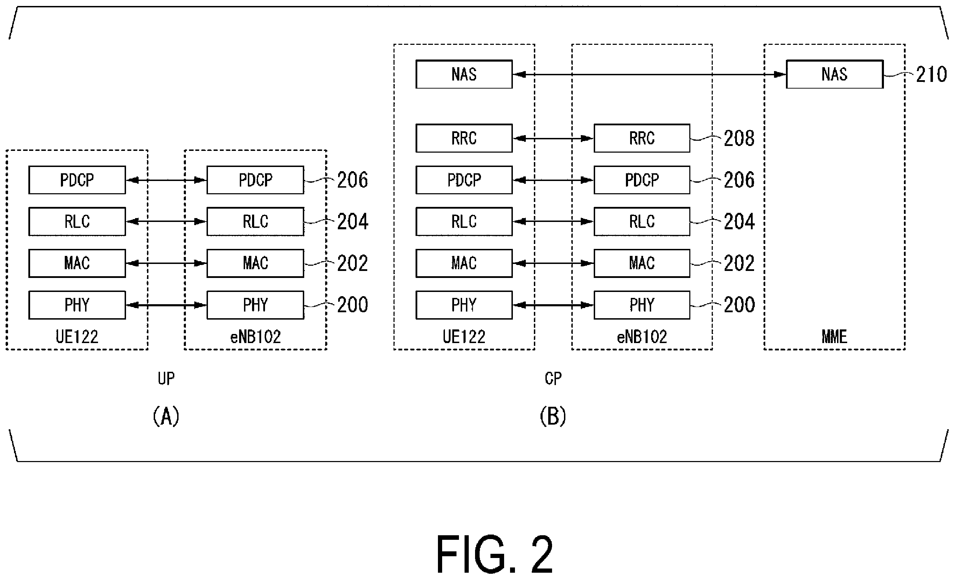

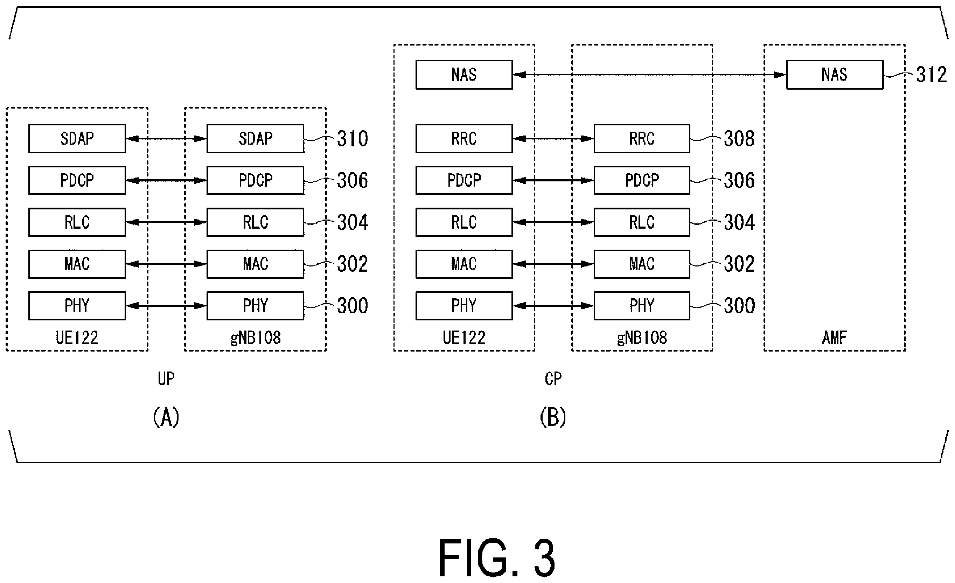

FIG. 2 is a diagram of an example of an E-UTRA protocol architecture according to the present embodiment. FIG. 3 is a diagram of an example of an NR protocol architecture according to the present embodiment. Note that functions of each protocol to be described with reference to FIG. 2 and/or FIG. 3 are a part of functions closely related to the present embodiment, and other functions may be provided. Note that, in the present embodiment, an uplink (UL) may be a link from the terminal apparatus to the base station apparatus. In the present embodiment, a downlink (DL) may be a link from the base station apparatus to the terminal apparatus. In the present embodiment, the sidelink (SL) may be a link between a terminal apparatus and a terminal apparatus via no base station apparatus.

FIG. 2(A) is a diagram of an E-UTRA user plane (UP) protocol stack. As illustrated in FIG. 2(A), the E-UTRA UP protocol may be a protocol between the UE 122 and the eNB 102. In other words, the E-UTRA UP protocol may be a protocol terminated in the eNB 102 on the network side. As illustrated in FIG. 2(A), the E-UTRA user plane protocol stack may include a Physical layer (PHY) 200 which is a radio physical layer, a Medium Access Control (MAC) 202 which is a medium access control layer, a Radio Link Control (RLC) 204 which is a radio link control layer, and a Packet Data Convergence Protocol (PDCP) 206 which is a packet data convergence protocol layer.

FIG. 3(A) is a diagram of an NR user plane (UP) protocol stack. As illustrated in FIG. 3(A), the NR UP protocol may be a protocol between the UE 122 and the gNB 108. In other words, the NR UP protocol may be a protocol terminated in the gNB 108 on the network side. As illustrated in FIG. 3(A), the NR user plane protocol stack may include a PHY 300 which is a radio physical layer, a MAC 302 which is a medium access control layer, an RLC 304 which is a radio link control layer, a PDCP 306 which is a packet data convergence protocol layer, and a Service Data Adaptation Protocol (SDAP) 310 which is a service data adaptation protocol layer.

FIG. 2(B) is a diagram of an E-UTRA control plane (CP) protocol architecture. As illustrated in FIG. 2(B), in the E-UTRA CP protocol, a Radio Resource Control (RRC) 208 being a radio resource control layer may be a protocol between the UE 122 and the eNB 102. In other words, the RRC 208 may be a protocol terminated in the eNB 102 on the network side. In the E-UTRA CP protocol, a Non Access Stratum (NAS) 210 being a non Access Stratum (AS) layer (non AS layer) may be a protocol between the UE 122 and the MME. In other words, the NAS 210 may be a protocol terminated in the MME on the network side.

FIG. 3(B) is a diagram of an NR control plane (CP) protocol architecture. As illustrated in FIG. 3(B), in the NR CP protocol, an RRC 308 being a radio resource control layer may be a protocol between the UE 122 and the gNB 108. In other words, the RRC 308 may be a protocol terminated in the gNB 108 on the network side. In the NR CP protocol, a NAS 312 being a non AS layer may be a protocol between the UE 122 and the AMF. In other words, the NAS 312 may be a protocol terminated in the AMF on the network side.

Note that the Access Stratum (AS) layer may be a layer terminated between the UE 122 and the eNB 102 and/or the gNB 108. In other words, the AS layer may be a layer including a part or all of the PHY 200, the MAC 202, the RLC 204, the PDCP 206, and the RRC 208, and/or a layer including a part or all of the PHY 300, the MAC 302, the RLC 304, the PDCP 306, the SDAP 310, and the RRC 308.

Note that, in the present embodiment, terms such as a PHY (PHY layer), a MAC (MAC layer), an RLC (RLC layer), a PDCP (PDCP layer), an RRC (RRC layer), and a NAS (NAS layer) may be hereinafter used, without the protocol of E-UTRA and the protocol of NR being distinguished from each other. In this case, the PHY (PHY layer), the MAC (MAC layer), the RLC (RLC layer), the PDCP (PDCP layer), the RRC (RRC layer), and the NAS (NAS layer) may be the PHY (PHY layer), the MAC (MAC layer), the RLC (RLC layer), the PDCP (PDCP layer), the RRC (RRC layer), and the NAS (NAS layer) of the E-UTRA protocol, or may be the PHY (PHY layer), the MAC (MAC layer), the RLC (RLC layer), the PDCP (PDCP layer), the RRC (RRC layer), and the NAS (NAS layer) of the NR protocol, respectively. The SDAP (SDAP layer) may be the SDAP (SDAP layer) of the NR protocol.

In the present embodiment, in a case that the protocol of E-UTRA and the protocol of NR are distinguished from each other, the PHY 200, the MAC 202, the RLC 204, the PDCP 206, and the RRC 208 may be hereinafter respectively referred to as the PHY for E-UTRA or the PHY for LTE, the MAC for E-UTRA or the MAC for LTE, the RLC for E-UTRA or the RLC for LTE, the PDCP for E-UTRA or the PDCP for LTE, and the RRC for E-UTRA or the RRC for LTE. The PHY 200, the MAC 202, the RLC 204, the PDCP 206, and the RRC 208 may respectively be referred to as an E-UTRA PHY or an LTE PHY, an E-UTRA MAC or an LTEMAC, an E-UTRA RLC or an LTE RLC, an E-UTRA PDCP or an LTE PDCP, an E-UTRA RRC or an LTE RRC, and the like. In a case that the protocol of E-UTRA and the protocol of NR are distinguished from each other, the PHY 300, the MAC 302, the RLC 304, the PDCP 306, and the RRC 308 may be referred to as a PHY for NR, a MAC for NR, an RLC for NR, an RLC for NR, and an RRC for NR, respectively. The PHY 300, the MAC 302, the RLC 304, the PDCP 306, and the RRC 308 may be referred to as an NR PHY, an NR MAC, an NR RLC, an NR PDCP, an NR RRC, and the like, respectively.

Entities in the AS layer of E-UTRA and/or NR will be described. An entity having a part or all of functions of the MAC layer may be referred to as a MAC entity. An entity having a part or all of functions of the RLC layer may be referred to as an RLC entity. An entity having a part or all of functions of the PDCP layer may be referred to as a PDCP entity. An entity having a part or all of functions of the SDAP layer may be referred to as an SDAP entity. An entity having a part or all of functions of the RRC layer may be referred to as an RRC entity. The MAC entity, the RLC entity, the PDCP entity, the SDAP entity, and the RRC entity may be replaced with a MAC, an RLC, a PDCP, an SDAP, and an RRC, respectively.

Note that data provided from the MAC, the RLC, the PDCP, and the SDAP to a lower layer, and/or data provided to the MAC, the RLC, the PDCP, and the SDAP from a lower layer may be referred to as a MAC Protocol Data Unit (PDU), an RLC PDU, a PDCP PDU, and an SDAP PDU, respectively. Data provided to the MAC, the RLC, the PDCP, and the SDAP from an upper layer, and/or data provided from the MAC, the RLC, the PDCP, and the SDAP to an upper layer may be referred to as a MAC Service Data Unit (SDU), an RLC SDU, a PDCP SDU, and an SDAP SDU, respectively. A segmented RLC SDU may be referred to as an RLC SDU segment.

Here, the base station apparatus and the terminal apparatus exchange (transmit and/or receive) signals with each other in upper layers (higher layers). The higher layer may be referred to and interchangeably interpreted as an upper layer. For example, the base station apparatus and the terminal apparatus may transmit and/or receive an RRC message (also referred to as RRC signalling) in the Radio Resource Control (RRC) layer. In a Medium Access Control (MAC) layer, the base station apparatus and the terminal apparatus may transmit and/or receive a MAC control element. Additionally, the RRC layer of the terminal apparatus acquires system information broadcast from the base station apparatus. In this regard, the RRC message, the system information, and/or the MAC control element are also referred to as upper layer signaling (higher layersignaling) or an upper layer parameter (higher layer parameter). Each of the parameters included in the upper layer signaling received by the terminal apparatus may be referred to as an upper layer parameter. For example, in the processing of the PHY layer, the upper layer means an upper layer as viewed from the PHY layer, and thus may mean one or multiple of the MAC layer, the RRC layer, an RLC layer, a PDCP layer, a Non Access Stratum (NAS) layer, and the like. For example, in the processing of the MAC layer, the upper layer may mean one or multiple of the RRC layer, the RLC layer, the PDCP layer, the NAS layer, and the like.

Hereinafter, "A is given (provided) in the upper layer" or "A is given (provided) by the upper layer" may mean that the upper layer (mainly the RRC layer, the MAC layer, or the like) of the terminal apparatus receives A from the base station apparatus, and that the received A is given (provided) from the upper layer of the terminal apparatus to the lower layer (mainly the MAC layer or the physical layer) of the terminal apparatus. For example, "an upper layer parameter being provided" in the terminal apparatus may mean that upper layer signaling is received from the base station apparatus, and an upper layer parameter included in the received upper layer signaling is provided from the upper layer of the terminal apparatus to the lower layer of the terminal apparatus. An upper layer parameter being configured for the terminal apparatus may mean that the upper layer parameter is given (provided) to the terminal apparatus. For example, an upper layer parameter being configured for the terminal apparatus may mean that the terminal apparatus receives upper layer signaling from the base station apparatus and configures the received upper layer parameter in the upper layer. However, an upper layer parameter being configured for the terminal apparatus may include a default parameter given in advance being configured in the upper layer of the terminal apparatus. In description of transmission of an RRC message from the terminal apparatus to the base station apparatus, the expression that a message is submitted from the RRC entity of the terminal apparatus to a lower layer may be used. In the terminal apparatus, "submitting a message to a lower layer" from the RRC entity may mean submitting a message to the PDCP layer. In the terminal apparatus, "submitting a message to a lower layer" from the RRC layer may mean submitting the message of the RRC to a PDCP entity corresponding to each SRB (SRB0, SRB1, SRB2, SRB3, or the like) because the message is transmitted using the SRB. In a case that the RRC entity of the terminal apparatus receives an indication from the lower layer, the lower layer may mean one or multiple of the PHY layer, the MAC layer, the RLC layer, the PDCP layer, and the like.

An example of the functions of the PHY will be described. The PHY of the terminal apparatus may have a function of receiving data transmitted from the PHY of the base station apparatus via a Downlink (DL) Physical Channel. The PHY of the terminal apparatus may have a function of transmitting data to the PHY of the base station apparatus via an Uplink (UL) physical channel. The PHY may be connected to an upper MAC with a Transport Channel. The PHY may deliver data to the MAC via the transport channel. The PHY may be provided with data from the MAC via the transport channel. In the PHY, in order to identify various pieces of control information, a Radio Network Temporary Identifier (RNTI) may be used.

Now, the physical channels will be described. The physical channels used for radio communication between the terminal apparatus and the base station apparatus may include the following physical channels.
- Physical Broadcast CHannel (PBCH)
- Physical Downlink Control CHannel (PDCCH)
- Physical Downlink Shared CHannel (PDSCH)
- Physical Uplink Control CHannel (PUCCH)
- Physical Uplink Shared CHannel (PUSCH)
- Physical Random Access CHannel (PRACH)

The PBCH may be used to broadcast system information required by the terminal apparatus.

The PBCH may be used to broadcast time indexes (SSB-Indexes) within the periodicity of Synchronization Signal Blocks (SSBs) in NR.

The PDCCH may be used to transmit (or carry) Downlink Control Information (DCI) in downlink radio communication (radio communication from the base station apparatus to the terminal apparatus). Here, one or multiple pieces of DCI (which may be referred to as DCI formats) may be defined for transmission of the downlink control information. In other words, a field for the downlink control information may be defined as DCI and may be mapped to information bits. The PDCCH may be transmitted in PDCCH candidates. The terminal apparatus may monitor a set of PDCCH candidates in a serving cell. Monitoring a set of PDCCH candidates may mean attempting to decode the PDCCH in accordance with a certain DCI format. The terminal apparatus may monitor the PDCCH candidates in monitoring occasions configured in one or multiple configured Control Resource Sets (CORESETs) configured by the search space configuration. The DCI format may be used for scheduling of the PUSCH in the serving cell. The PUSCH may be used for transmission of user data, transmission of RRC messages to be described below, and the like.

The PUCCH is used to transmit Uplink Control Information (UCI) in a case of uplink radio communication (radio communication from the terminal apparatus to the base station apparatus). Here, the uplink control information may include Channel State Information (CSI) used to indicate a downlink channel state. The uplink control information may include a Scheduling Request (SR) used for requesting Uplink Shared CHannel (UL-SCH) resources. The uplink control information may include a Hybrid Automatic Repeat reQuest ACKnowledgement (HARQ-ACK).

The PDSCH may be used to transmit downlink data (Downlink Shared CHannel (DL-SCH)) from the MAC layer. In a case of the downlink, the PDSCH may be used to transmit System Information (SI), a Random Access Response (RAR), and the like.

The PUSCH may be used to transmit uplink data (Uplink-Shared CHannel (UL-SCH)) from the MAC layer or to transmit the HARQ-ACK and/or CSI along with the uplink data. The PUSCH may be used to transmit CSI only or a HARQ-ACK and CSI only. In other words, the PUSCH may be used to transmit the UCI only. The PDSCH or the PUSCH may be used to transmit an RRC message and a MAC CE described below. In this regard, in the PDSCH, the RRC message transmitted from the base station apparatus may be signalling common to multiple terminal apparatuses in a cell. The RRC message transmitted from the base station apparatus may be dedicated signalling (dedicated signaling) for a certain terminal apparatus. In other words, terminal apparatus-specific (UE-specific) information may be transmitted through dedicated signaling to the certain terminal apparatus. Additionally, the PUSCH may be used to transmit UE capabilities in the uplink.

The PRACH may be used for transmitting a random access preamble. The PRACH may be used to indicate an initial connection establishment procedure, a handover procedure, a connection re-establishment (connection re-establishment) procedure, synchronization (timing adjustment) for uplink transmission, and a request for a UL-SCH resource.

An example of the functions of the MAC will be described. The MAC may be referred to as a MAC sublayer. The MAC may have a function of mapping various logical channels to their corresponding transport channels. The logical channel may be identified with a logical channel identifier (Logical Channel Identity or Logical Channel ID). The MAC may be connected to the higher RLC via the logical channel. The logical channel may be classified into a control channel for transmitting control information and a traffic channel for transmitting user information depending on the type of information to be transmitted. The logical channel may be classified into an uplink logical channel and a downlink logical channel. The MAC may have a function of multiplexing MAC SDUs belonging to one or multiple different logical channels and providing the multiplexed MAC SDUs to the PHY. The MAC may have a function of demultiplexing the MAC PDUs provided from the PHY and providing the demultiplexed MAC PDUs to an upper layer via the logical channels to which the respective MAC SDUs belong. The MAC may have a function of performing error correction through a Hybrid Automatic Repeat reQuest (HARQ). The MAC may have a scheduling report function that is a function of reporting scheduling information. The MAC may have a function of performing priority processing among the terminal apparatuses by using dynamic scheduling. The MAC may have a function of performing priority processing among the logical channels in one terminal apparatus. The MAC may have a function of performing priority processing of resources overlapping in one terminal apparatus. The E-UTRA MAC may have a function of identifying Multimedia Broadcast Multicast Services (MBMS). The NR MAC may have a function of identifying a Multicast Broadcast Service (MBS). The MAC may have a function of selecting a transport format. The MAC may have a function of performing Discontinuous Reception (DRX) and/or Discontinuous Transmission (DTX), a function of performing a Random Access (RA) procedure, a Power Headroom Report (PHR) function of indicating information of transmittable power, a Buffer Status Report (BSR) function of indicating data volume information of a transmission buffer, and the like. The NR MAC may have a Bandwidth Adaptation (BA) function. A MAC PDU format used in the E-UTRA MAC and a MAC PDU format used in the NR MAC may be different from each other. The MAC PDU may include a MAC control element (MAC CE) being an element for performing control in the MAC.

Uplink (UL) and/or Downlink (DL) logical channels used in E-UTRA and/or NR will be described.

A Broadcast Control Channel (BCCH) may be a downlink logical channel for broadcasting control information, such as System Information (SI).

A Paging Control Channel (PCCH) may be a downlink logical channel for carrying a Paging message.

A Common Control Channel (CCCH) may be a logical channel for transmitting control information between the terminal apparatus and the base station apparatus. The CCCH may be used in a case that the terminal apparatus does not have RRC connection. The CCCH may be used between the base station apparatus and multiple terminal apparatuses.

A Dedicated Control Channel (DCCH) may be a logical channel for transmitting dedicated control information in a point-to-point bi-directional manner between the terminal apparatus and the base station apparatus. The dedicated control information may be control information dedicated to each terminal apparatus. The DCCH may be used in a case that the terminal apparatus has RRC connection.

A Dedicated Traffic Channel (DTCH) may be a logical channel for transmitting user data in a point-to-point manner between the terminal apparatus and the base station apparatus. The DTCH may be a logical channel for transmitting dedicated user data. The dedicated user data may be user data dedicated to each terminal apparatus. The DTCH may be present in both of the uplink and the downlink.

A Multicast Control Channel (MCCH) may be a point-to-multipoint downlink channel for transmitting MBMS control information for one or multiple MTCHs from the base station apparatus to the terminal apparatus. The MCCH may be a logical channel for multicasting and/or broadcasting. The MCCH may carry an MBS broadcast configuration (MBSBroadcastConfiguration) provided in the cell in which the MCCH is transmitted.

A Multicast Traffic Channel (MTCH) may be a point-to-multipoint downlink channel for transmitting data from the base station apparatus to the terminal apparatus. The MTCH may be a logical channel for multicasting and/or broadcasting.

Mapping between the logical channels and the transport channels in uplink, in E-UTRA and/or NR will be described.

The CCCH may be mapped to an Uplink Shared Channel (UL-SCH) being an uplink transport channel.

The DCCH may be mapped to an Uplink Shared Channel (UL-SCH) being an uplink transport channel.

The DTCH may be mapped to an Uplink Shared Channel (UL-SCH) being an uplink transport channel.

Mapping between the logical channels and the transport channels in downlink, in E-UTRA and/or NR will be described.

The BCCH may be mapped to a Broadcast Channel (BCH) and/or a Downlink Shared Channel (DL-SCH) being a downlink transport channel.

The PCCH may be mapped to a Paging Channel (PCH) being a downlink transport channel.

The CCCH may be mapped to a Downlink Shared Channel (DL-SCH) being a downlink transport channel.

The DCCH may be mapped to a Downlink Shared Channel (DL-SCH) being a downlink transport channel.

The DTCH may be mapped to a Downlink Shared Channel (DL-SCH) being a downlink transport channel.

The MCCH may be mapped to a Downlink Shared Channel (DL-SCH) being a downlink transport channel.

The MTCH may be mapped to a Downlink Shared Channel (DL-SCH) being a downlink transport channel.

An example of the functions of the RLC will be described. The RLC may be referred to as an RLC sublayer. The E-UTRA RLC may have a function of segmenting (Segmentation) and/or concatenating (Concatenation) data provided from the PDCP of an upper layer, and providing the segmented and/or concatenated data to a lower layer. The E-UTRA RLC may have a function of reassembling (reassembly) and re-ordering data provided from a lower layer, and providing the reassembled and re-ordered data to an upper layer. The NR RLC may have a function of assigning data provided from the PDCP of an upper layer with a sequence number independent of a sequence number assigned in the PDCP. The NR RLC may have a function of segmenting (Segmentation) data provided from the PDCP and providing the segmented data to a lower layer. The NR RLC may have a function of reassembling (reassembly) data provided from a lower layer, and providing the reassembled data to an upper layer. The RLC may have a data retransmission function and/or retransmission request function (AutomaticRepeat reQuest (ARQ)). The RLC may have a function of performing error correction using the ARQ. Control information that indicates data required to be retransmitted and that is transmitted from a receiving side to a transmitting side of the RLC in order to perform the ARQ may be referred to as a status report. A status report transmission indication transmitted from the transmitting side to the receiving side of the RLC may be referred to as a poll. The RLC may have a function of detecting data duplication. The RLC may have a function of discarding data. The RLC may have three modes, namely a Transparent Mode (TM), an Unacknowledged Mode (UM), and an Acknowledged Mode (AM). In the TM, segmentation of data received from an upper layer may not be performed, and addition of an RLC header need not be performed. A TM RLC entity may be a uni-directional entity, and may be configured as a transmitting TM RLC entity or as a receiving TM RLC entity. In the UM, segmentation and/or concatenation of data received from an upper layer, addition of an RLC header, and the like may be performed, but retransmission control of data need not be performed. A UM RLC entity may be a uni-directional entity, or may be a bi-directional entity. In a case that the UM RLC entity is a uni-directional entity, the UM RLC entity may be configured as a transmitting UM RLC entity or as a receiving UM RLC entity. In a case that the UM RLC entity is a bi-directional entity, the UM RLC entity may be configured as a UM RLC entity including a transmitting side and a receiving side. In the AM, segmentation and/or concatenation of data received from an upper layer, addition of an RLC header, retransmission control of data, and the like may be performed. An AM RLC entity may be a bi-directional entity, and may be configured as an AM RLC including a transmitting side and a receiving side. Note that data provided to a lower layer and/or data provided from a lower layer in the TM may be referred to as a TMD PDU. Data provided to a lower layer and/or data provided from a lower layer in the UM may be referred to as a UMD PDU. Data provided to a lower layer or data provided from a lower layer in the AM may be referred to as an AMD PDU. An RLC PDU format used in the E-UTRA RLC and an RLC PDU format used in the NR RLC may be different from each other. The RLC PDU may include an RLC PDU for data and an RLC PDU for control. The RLC PDU for data may be referred to as an RLC DATA PDU (RLC Data PDU, RLC data PDU). The RLC PDU for control may be referred to as an RLC CONTROL PDU (RLC Control PDU, RLC control PDU).

An example of the functions of the PDCP will be described. The PDCP may be referred to as a PDCP sublayer. The PDCP may have a function of maintenance of the sequence number. The PDCP may have a header compression and decompression function for efficiently transmitting, in wireless sections, user data such as an IP Packet and an Ethernet frame. A protocol used for header compression and decompression for an IP packet may be referred to as a Robust Header Compression (ROHC) protocol. A protocol used for header compression and decompression for an Ethernet frame may be referred to as an Ethernet (trade name) Header Compression (EHC) protocol. The PDCP may have a function of encrypting and decrypting data. The PDCP may have a function of data integrity protection and integrity verification. The PDCP may have a function of re-ordering. The PDCP may have a function of retransmitting the PDCP SDU. The PDCP may have a function of discarding data using a discard timer. The PDCP may have a Duplication function. The PDCP may have a function of discarding pieces of data received in a duplicate manner. The PDCP entity may be a bi-directional entity, and may include a transmitting PDCP entity and a receiving PDCP entity. A PDCP PDU format used in the E-UTRA PDCP and a PDCP PDU format used in the NR PDCP may be different from each other. The PDCP PDU may include a PDCP PDU for data and a PDCP PDU for control. The PDCP PDU for data may be referred to as a PDCP DATA PDU (PDCP Data PDU, PDCP data PDU). The PDCP PDU for control may be referred to as a PDCP CONTROL PDU (PDCP Control PDU, PDCP control PDU).

An example of the functions of the SDAP will be described. The SDAP is a service data adaptation protocol layer. The SDAP may have a function of performing association (mapping) between a downlink QoS flow transmitted from the 5GC 110 to the terminal apparatus via the base station apparatus and a data radio bearer (DRB) and/or mapping between an uplink QoS flow transmitted from the terminal apparatus to the 5GC 110 via the base station apparatus and a DRB. The SDAP may have a function of storing mapping rule information. The SDAP may have a function of performing marking of a QoS flow identity (QoS Flow ID (QFI)). Note that the SDAP PDU may include an SDAP PDU for data and an SDAP PDU for control. The SDAP PDU for data may be referred to as an SDAP DATA PDU (SDAP Data PDU, SDAP data PDU). The SDAP PDU for control may be referred to as an SDAP CONTROL PDU (SDAP Control PDU, SDAP control PDU). Note that, in the terminal apparatus, one SDAP entity may be present for one PDU session.

An example of the functions of the RRC will be described. The RRC may have a broadcast function. The RRC may have a Paging function from the EPC 104 and/or the 5GC 110. The RRC may have a paging function from the gNB 108 or the eNB 102 connected to the 5GC 110. The RRC may have an RRC connection management function. The RRC may have a radio bearer control function. The RRC may have a cell group control function. The RRC may have a mobility control function. The RRC may have a terminal apparatus measurement reporting and terminal apparatus measurement reporting control function. The RRC may have a QoS management function. The RRC may have a radio link failure detection and recovery function. The RRC may perform broadcasting, paging, RRC connection management, radio bearer control, cell group control, mobility control, terminal apparatus measurement reporting and terminal apparatus measurement reporting control, QoS management, detection and recovery of radio link failure, and the like by using the RRC message. Note that RRC messages and parameters used in the E-UTRA RRC may be different from RRC messages and parameters used in the NR RRC.

The RRC message may be transmitted using the BCCH of the logical channel. In addition to or instead of this, the RRC message may be transmitted using the PCCH of the logical channel. In addition to or instead of this, the RRC message may be transmitted using the CCCH of the logical channel. In addition to or instead of this, the RRC message may be transmitted using the DCCH of the logical channel. In addition to or instead of this, the RRC message may be transmitted using the MCCH of the logical channel. The RRC message transmitted using the DCCH is referred to as dedicated RRC signalling (Dedicated RRC signaling) or RRC signalling.

In the RRC message transmitted using the BCCH, for example, a Master Information Block (MIB) may be included, a System Information Block (SIB) of each type may be included, or another RRC message may be included. In the RRC message transmitted using the PCCH, for example, a paging message may be included, or another RRC message may be included.

In the RRC message transmitted in the uplink (UL) direction using the CCCH, for example, an RRC setup request message (RRC Setup Request), an RRC resume request message (RRC Resume Request), an RRC re-establishment request message (RRC Reestablishment Request), an RRC system information request message (RRC System Info Request), and the like may be included. For example, an RRC connection request message (RRC Connection Request), an RRC connection resume request message (RRC Connection Resume Request), an RRC connection reestablishment request message (RRC Connection Reestablishment Request), and the like may be included. Another RRC message may be included.

In the RRC message transmitted in the downlink (DL) direction using the CCCH, for example, an RRC connection reject message (RRC Connection Reject), an RRC connection setup message (RRC Connection Setup), an RRC connection reestablishment message (RRC Connection Reestablishment), an RRC connection reestablishment reject message (RRC Connection Reestablishment Reject), and the like may be included. For example, an RRC reject message (RRC Reject), an RRC setup message (RRC Setup), and the like may be included. Another RRC message may be included.

In the RRC signalling transmitted in the uplink (UL) direction using the DCCH, for example, a measurement report message (Measurement Report), an RRC connection reconfiguration complete message (RRC Connection Reconfiguration Complete), an RRC connection setup complete message (RRC Connection Setup Complete), an RRC connection reestablishment complete message (RRC Connection Reestablishment Complete), a security mode complete message (Security Mode Complete), a UE capability information message (UE Capability Information), and the like may be included. For example, a measurement report message (Measurement Report), an RRC reconfiguration complete message (RRC Reconfiguration Complete), an RRC setup complete message (RRC Setup Complete), an RRC re-establishment complete message (RRC Reestablishment Complete), an RRC resume complete message (RRC Resume Complete), a security mode complete message (Security Mode Complete), a UE capability information message (UE Capability Information), and the like may be included. Another RRC signalling may be included.

In the RRC signalling transmitted in the downlink (DL) direction using the DCCH, for example, an RRC connection reconfiguration message (RRC Connection Reconfiguration), an RRC connection release message (RRC Connection Release), a security mode command message (Security Mode Command), a UE capability enquiry message (UE Capability Enquiry), and the like may be included. For example, an RRC reconfiguration message (RRC Reconfiguration), an RRC resume message (RRC Resume), an RRC release message (RRC Release), an RRC re-establishment message (RRC Reestablishment), a security mode command message (Security Mode Command), a UE capability enquiry message (UE Capability Enquiry), and the like may be included. Another RRC signalling may be included.

The RRC messages sent in the downlink (DL) direction using the MCCH may include, for example, an MBS broadcast configuration message (MBSBroadcastConfiguration message). Another RRC signalling may be included.

An example of the functions of the NAS will be described. The NAS may have an authentication function. The NAS may have a function of performing mobility management. The NAS may have a function of security control.

The functions of the PHY, the MAC, the RLC, the PDCP, the SDAP, the RRC, and the NAS described above are merely an example, and a part or all of each of the functions may not be implemented. Some or all of the functions of each layer may be included in another layer.

The state transition of the UE 122 in LTE and NR will now be described. The UE 122 connected to an EPC or a 5GC may be in an RRC_CONNECTED state in a case that an RRC connection has been established. The state in which an RRC connection has been established may include a state in which the UE 122 retains a part or all of UE contexts to be described below. The state in which the RRC connection has been established may include a state in which the UE 122 can transmit and/or receive unicast data. Regarding the UE 122, in a case that the RRC connection is suspended, the UE 122 may be in an RRC_INACTIVE state. The case that the UE 122 is in the RRC_INACTIVE state may be a case that the UE 122 is connected to the 5GC and the RRC connection is suspended. In a case that the UE 122 is in neither the RRC_CONNECTED state nor the RRC_INACTIVE state, the UE 122 may be in an RRC_IDLE state.

Note that, in a case that the UE 122 is connected to the EPC, suspension of the RRC connection may be initiated by the E-UTRAN although the UE 122 does not have the RRC_INACTIVE state. In a case that the UE 122 is connected to the EPC and the RRC connection is suspended, the UE 122 may transition to the RRC_IDLE state while storing an AS context of the UE and an identifier (resumeIdentity) used for resumption (resume). In a case that the UE 122 stores the AS context of the UE and that the E-UTRAN permits the RRC connection to be resumed and that the UE 122 needs to transition from the RRC_IDLE state to the RRC_CONNECTED state, an upper layer (for example, the NAS layer) of the RRC layer of the UE 122 may initiate the resumption of the RRC connection suspended.

The definition of the suspension may vary between the UE 122 connected to the EPC 104 and the UE 122 connected to the 5GC 110. Some or all of the procedures for the UE 122 to resume from suspension may be different between a case that the UE 122 is connected to the EPC (the UE 122 is suspended in the RRC_IDLE state) and a case that the UE 122 is connected to the 5GC (the UE 122 is suspended in the RRC_INACTIVE state).

Note that the RRC_CONNECTED state, the RRC_INACTIVE state, and the RRC_IDLE state may be respectively referred to as a connected state (connected mode), an inactive state (inactive mode), and an idle state (idle mode), or may be respectively referred to as an RRC connected state (RRC connected mode), an RRC inactive state (RRC inactive mode), and an RRC idle state (RRC idle mode).

The AS context of the UE stored in the UE 122 may be information including all or some of a current RRC configuration, a current security context, a PDCP state including a RObust Header Compression (ROHC) state, a Cell Radio Network Temporary Identifier (C-RNTI) used in a PCell of a connection source, a cell identity (cellIdentity), and a physical cell identity of the PCell of the connection source. Note that the AS context of the UE stored in one or all of the eNB 102 and the gNB 108 may include information identical to the information of the AS context of the UE stored in the UE 122, or may include information different from the information included in the AS context of the UE stored in the UE 122.

The security context may be information including all or some of a ciphering key at the AS level, a Next Hop parameter (NH), a Next Hop Chaining Counter parameter (NCC) used to derive an access key for the next hop, an identifier of a ciphering algorithm at a selected AS level, and a counter used for replay protection.

Now, the Serving Cell will be described. In the terminal apparatus in the RRC connected state in which CA and/or DC described below is not configured, the serving cell may include one Primary Cell (PCell). In the terminal apparatus in the RRC connected state in which CA and/or DC described below is configured, multiple serving cells may mean a set of cell(s) including one or multiple Special Cells (SpCells) and one or multiple all Secondary Cells (SCells). The SpCell may support PUCCH transmission and contention-based Random Access (CBRA), and the SpCell may be constantly activated. The PCell may be a cell used for an RRC connection establishment procedure in a case that the terminal apparatus in the RRC idle state transitions to the RRC connected state. The PCell may be a cell used for an RRC connection re-establishment procedure in which the terminal apparatus performs re-establishment of RRC connection. The PCell may be a cell used for a random access procedure in a case of a handover. The PSCell may be a cell used for the random access procedure in a case of addition of a secondary node described below. The SpCell may be a cell used for purposes other than the purposes described above.

The group of serving cells configured for the terminal apparatus including the SpCell and one or multiple SCells may be considered as carrier aggregation (CA) being configured for the terminal apparatus. For the terminal apparatus configured with CA, a cell that provides additional radio resources to the SpCell may mean the SCell.

The Cell Group configured for the terminal apparatus from the base station apparatus will be described. The cell group may include one SpCell. The cell group may include one SpCell and one or multiple SCells. In other words, the cell group may include one SpCell, and optionally one or multiple SCells. The cell group may be expressed as a set of cells.

Dual connectivity (DC) may be a technology for performing data communication using radio resources of a cell group provided by a first base station apparatus (first node) and a cell group provided by a second base station apparatus (second node). In a case that the DC or the MR-DC described below is performed, the base station apparatus may add a cell group to the terminal apparatus. In order to perform the DC, the first base station apparatus may add the second base station apparatus. The first base station apparatus may be referred to as a Master Node (MN). The cell group provided by the master node may be referred to as a Master Cell Group (MCG). The second base station apparatus may be referred to as a Secondary Node (SN). The cell group provided by the secondary node may be referred to as a Secondary Cell Group (SCG). Note that the master node and the secondary node may be configured in the same base station apparatus.

In a case that DC is not configured, the cell group configured for the terminal apparatus may be referred to as an MCG. In the case that DC is not configured, the SpCell configured for the terminal apparatus may be the PCell. Further, NR in which the DC is not configured may be referred to as NR stand-alone (NR SA).

Note that the Multi-Radio Dual Connectivity (MR-DC) may be a technology for performing the DC using E-UTRA for the MCG and NR for the SCG. The MR-DC may be a technology for performing the DC using NR for the MCG and E-UTRA for the SCG. The MR-DC may be a technology for performing the DC using NR for both of the MCG and the SCG. The MR-DC may be a technology included in the DC. As an example of the MR-DC using E-UTRA for the MCG and NR for the SCG, there may be E-UTRA-NR Dual Connectivity (EN-DC) using the EPC as a core network, or there may be NG-RAN E-UTRA-NR Dual Connectivity (NGEN-DC) using the 5GC as a core network. As an example of the MR-DC using NR for the MCG and E-UTRA for the SCG, there may be NR-E-UTRA Dual Connectivity (NE-DC) using the 5GC as a core network. As an example of the MR-DC using NR for both of the MCG and the SCG, there may be NR-NR Dual Connectivity (NR-DC) using the 5GC as a core network.

Note that, in the terminal apparatus, one MAC entity may be present for each cell group. For example, in a case that the DC or the MR-DC is configured for the terminal apparatus, one MAC entity may be present for the MCG, and one MAC entity may be present for the SCG. The MAC entity for the MCG in the terminal apparatus may be constantly established for the terminal apparatus in all of the states (the RRC idle state, the RRC connected state, the RRC inactive state, and the like). The MAC entity for the SCG in the terminal apparatus may be created by the terminal apparatus in a case that the SCG is configured for the terminal apparatus. Configuration of the MAC entity for each cell group of the terminal apparatus may be performed in a case that the terminal apparatus receives RRC signalling from the base station apparatus. In a case that the MAC entity is associated with the MCG, the SpCell may mean the PCell. In a case that the MAC entity is associated with the SCG, the SpCell may mean a Primary SCG Cell (PSCell). In a case that the MAC entity is not associated with the cell group, the SpCell may mean the PCell. The PCell, the PSCell, and the SCell are each a serving cell. In EN-DC and NGEN-DC, the MAC entity for the MCG may be an E-UTRA MAC entity, and the MAC entity for the SCG may be an NR MAC entity. In NE-DC, the MAC entity for the MCG may be an NR MAC entity, and the MAC entity for the SCG may be an E-UTRA MAC entity. In NR-DC, the MAC entities for the MCG and the SCG may each be an NR MAC entity. Note that a case that one MAC entity is present for each cell group may be alternatively described as a case that one MAC entity is present for each SpCell. One MAC entity for each cell group may be replaced with one MAC entity for each SpCell.

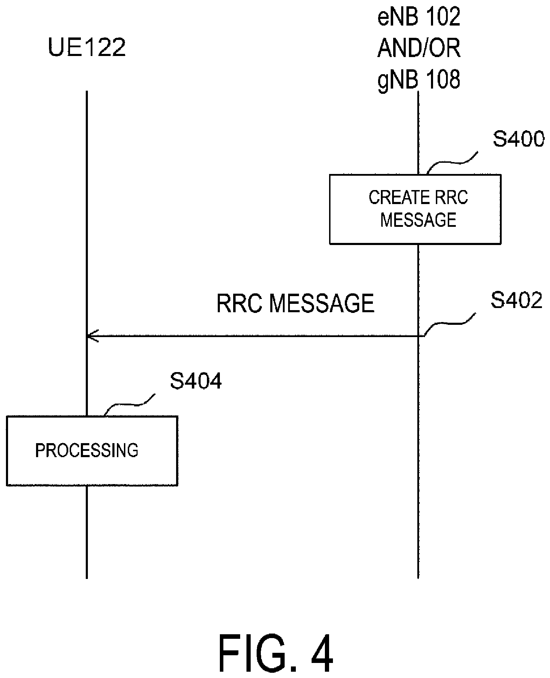

A flow of the RRC signalling transmitted and/or received between the terminal apparatus and the base station apparatus will be described. FIG. 4 is a diagram illustrating an example of a flow of a procedure for various configurations in the RRC according to the present embodiment. FIG. 4 is an example of a flow of a case in which the RRC signalling is transmitted from the base station apparatus (eNB 102 and/or gNB 108) to the terminal apparatus (UE 122).

In FIG. 4, the base station apparatus creates an RRC message (step S400). The creation of the RRC message in the base station apparatus may be performed so that the base station apparatus distributes System Information (SI) and a paging message. The creation of the RRC message in the base station apparatus may be performed so that the base station apparatus transmits RRC signalling that causes a specific terminal apparatus to perform processing. The processing that the specific terminal apparatus is caused to perform may include, for example, processing such as configuration related to security, reconfiguration of an RRC connection, a handover to a different RAT, suspension of an RRC connection, release of an RRC connection, and the like. The processing of reconfiguration of an RRC connection may include, for example, processing such as control (establishment, modification, release, or the like) of a radio bearer, control (establishment, addition, modification, release, or the like) of a cell group, measurement configuration, a handover, security key update, and the like. The creation of the RRC message in the base station apparatus may be performed for a response to RRC signalling transmitted from the terminal apparatus. The response to the RRC signalling transmitted from the terminal apparatus may include, for example, a response to an RRC setup request, a response to an RRC reconnection request, a response to an RRC resume request, and the like. The RRC message includes information (parameters) for various information indications and configurations. These parameters may be fields of the RRC message and/or information elements, or values of the fields (including the information elements). A structure of the RRC message may be notated by using a notation method referred to as Abstract Syntax Notation One (ASN.1).

In FIG. 4, the base station apparatus then transmits the RRC signalling created, to the terminal apparatus (Step S402). Then, in a case that processing such as a configuration is necessary in accordance with the RRC signalling received, the terminal apparatus performs the processing (Step S404). The terminal apparatus that has performed the processing may transmit RRC signalling for a response to the base station apparatus (not illustrated).

In addition to the example described above, the RRC signalling may be used for other purposes as well.

Note that in the MR-DC, the RRC on the master node side may be used to transfer the RRC signalling for the configuration (cell group configuration, radio bearer configuration, measurement configuration, and the like) on the SCG side to and from the terminal apparatus. For example, in the EN-DC or the NGEN-DC, the RRC signalling of E-UTRA transmitted and/or received between the eNB 102 and the UE 122 may include the RRC signalling of NR in a form of a container. In the NE-DC, the RRC signalling of NR transmitted and/or received between the gNB 108 and the UE 122 may include the RRC signalling of E-UTRA in a form of a container. The RRC signalling for the configuration on the SCG side may be transmitted and/or received between the master node and the secondary node.

Note that an embodiment is not limited to a case that the MR-DC is used, and the RRC signalling for E-UTRA transmitted from the eNB 102 to the UE 122 may include the RRC signalling for NR, and the RRC signalling for NR transmitted from the gNB 108 to the UE 122 may include the RRC signalling for E-UTRA.

Multicast/Broadcast Services (MBS) are described.

In the broadcast service, the same service and the same specific content data may be simultaneously provided to every terminal apparatus (UE 122) in a geographic area. The broadcast service may be distributed to the terminal apparatus using a broadcast session. The terminal apparatus may be able to receive the broadcast services in the RRC_IDLE, RRC_INACTIVE, and RRC_CONNECTED states.

In the multicast service, the same service and the same specific content data may be simultaneously provided to specific one or multiple terminal apparatuses (also referred to as a UE set). The multicast service may be delivered to the terminal apparatus using a multicast session. The terminal apparatus can receive the multicast service using mechanisms such as PTP distribution and/or PTM distribution. The HARQ feedback/retransmission may be applied to both PTP and PTM transmissions.

The following logical channels may be used for MBS distribution:
MTCH: a PTM downlink channel for transmitting MBS data of a multicast session or broadcast session from the network to the terminal apparatus
DTCH: a PTP channel defined for transmitting MBS data of a multicast session from the network to the terminal apparatus
MCCH: a PTM downlink channel used to transmit MBS broadcast control information and/or MBS multicast control information of one or multiple MTCHs associated with the terminal apparatus from the network.

An example of a method of using the RNTI in the PTM transmission is described. The terminal apparatus can receive different services using the same or different G-RNTI. The terminal apparatus can receive different services using the same or different G-CS-RNTI.

In the multicast service, the gNB may distribute an MBS data packet by using the following method.

PTP transmission: the gNB may independently deliver separate copies of the MBS data packet to each terminal apparatus. That is, the gNB may schedule a terminal apparatus-specific PDSCH using a terminal apparatus-specific PDCCH scrambled by a terminal apparatus-specific RNTI (e.g., C-RNTI), and deliver separate copies of the MBS data packet scrambled by the same terminal apparatus-specific RNTI to each terminal apparatus.

PTM transmission: the gNB may deliver a single copy of the MBS data packet to a UE set. That is, the gNB may use a group-common PDCCH scrambled by a group-common RNTI to schedule a group-common PDSCH, and deliver a single copy of the MBS data packet scrambled by the same group-common RNTI to the UE set.

In a case that both PTM transmission and PTP transmission are configured for the terminal apparatus, the gNB may dynamically determine whether to deliver multicast data by a PTM leg and/or a PTP leg for a specific terminal apparatus based on information such as MBS session QoS requirements, the number of joined terminal apparatuses, and terminal apparatus individual feedback on reception quality. The same QoS requirements may apply to both the PTM transmission and the PTP transmission regardless of the determination.

The MBS broadcast may be received by the terminal apparatus in the RRC_IDLE state, the RRC_INACTIVE state, and the RRC_CONNECTED state. The terminal apparatus may receive MBS configuration (e.g., parameters required for MTCH reception, etc.) for the broadcast session via the MCCH in the RRC_IDLE state, the RRC_INACTIVE state, and the RRC_CONNECTED state. Parameters required for reception of the MCCH may be provided through the system information.

The following principles may apply to a structure of the MCCH.
- The MCCH may provide a list of some or all broadcast services transmitted on the MTCH and/or information related to the broadcast session. The information related to the broadcast session may include an MBS session ID, associated G-RNTI scheduling information, and information about neighbor cells providing a certain service on the MTCH. The MCCH content may be transmitted within a periodically occurring time domain window defined by an MCCH repetition period, an MCCH window period, and a radio frame/slot offset.
- The MCCH uses a modification period, and the MCCH contents may be only allowed to be modified at a modification period boundary. A notification mechanism is used to announce the change of MCCH contents due to broadcast session start, modification or stop and due to neighbor cell information modification.

- The terminal apparatus, in a case of receiving an MCCH modification notification, may acquire the updated MCCH in the same MCCH modification period where the modification notification is transmitted.

The continuity of the broadcast service in the RRC_IDLE state and the RRC_INACTIVE state is described.

A mobility procedure for MBS reception allows the terminal apparatus to start or continue receiving the MBS service in a case of changing the cell. The gNB may indicate in the MCCH a list of neighbor cells providing the same MBS broadcast service as the MBS broadcast service provided in the serving cell. This allows the terminal apparatus to request unicast reception of the service before moving to a cell not providing the MBS broadcast service using PTM transmission. To eliminate the need to read MBS broadcast-related system information on neighbor frequencies, the terminal apparatus can know on which frequency the MBS broadcast service via PTM is provided through a User Service Description (USD) or a combination of the following:
- USD
- System information (system information block: SIB, for example, SIB 21).

In the RRC_IDLE and RRC_INACTIVE states, the terminal apparatus may apply the following modifications to the normal cell reselection rules.
- The terminal apparatus that is receiving or interested in receiving MBS broadcast services via PTM can receive these MBS broadcast services while camping on the frequency providing these MBS broadcast services and can make this frequency the highest priority frequency in a case that certain conditions are met.

- In a case that the MBS broadcast services which the terminal apparatus is interested in are unavailable (e.g., after a session ends), or in a case that the terminal apparatus is no longer interested in receiving the services, the terminal apparatus does not need to increase a priority of the frequency providing these MBS broadcast services.

The continuity of the MBS broadcast service in the RRC_CONNECTED state is described.

The terminal apparatus in the RRC_CONNECTED state can transmit an MBS Interest Indication including the following information to the gNB in order to ensure the continuity of the MBS broadcast service.
- List of MBS frequencies that the terminal apparatus is receiving or interested in receiving, sorted in descending order of importance
- Priority of reception of MBS frequencies, a unicast bearer, and multicast MRB that the terminal apparatus is receiving or interested in receiving
- List of MBS broadcast services that the terminal apparatus is receiving or interested in receiving in a case that the SIB (e.g., SIB 20) containing information needed to acquire the configuration of the MCCH and/or MTCH for MBS broadcast is provided by the PCell or SCell.

MBS Interest Indication information reporting may be implicitly enabled/disabled based whether the SIB (e.g., SIB 21) is present that includes mapping information between the current and/or neighbor carrier frequency and MBS Frequency Selection Area Identities (FSAIs). The information included in the MBS Interest indication may be exchanged between the source gNB and the target gNB during the handover.

In the broadcast service, the gNB may deliver an MBS data packet broadcast by using the following method.

PTM transmission: the gNB, the gNB may deliver a single copy of the MBS data packet to the UE set. For example, the gNB may use a group-common PDCCH with CRC-scrambled with a group-common RNTI to schedule a group-common PDSCH scrambled with the same group-common RNTI.

The MBS broadcast is described in detail.

The configuration information of the MBS broadcast may be provided in the MCCH logical channel. Some configuration information, including Common Frequency Resources (CFR) configuration for the MCCH and MTCH, may be provided on logical channels other than the MCCH logical channel (e.g., BCCH, CCCH, DCCH, or DTCH).

The MCCH may be used to deliver MBS broadcast sessions provided in a cell and an MBS broadcast configuration message (MBSBroadcastConfiguration message) indicating scheduling information related to these sessions. Optionally, the MBSBroadcastConfiguration message may include a list of neighbor cells providing the same service as the MBS broadcast service provided in the current cell. The configuration information needed for the terminal apparatus to receive the MCCH may be provided in the SIB 1 and the SIB 20. In addition, information about the service continuity of the MBS broadcast may be provided in the SIB 21.

The MCCH information (i.e., the information transmitted in the message transmitted on the MCCH) may be transmitted within a configured transmission window periodically with a configurable repetition period. The MCCH transmission (and associated radio resources and MCS) may be indicated by a PDCCH addressed to the MCCH-RNTI.

A PDCCH monitoring occasion for MCCH transmission may be determined according to a common search space indicated by searchspaceMCCH. In a case that searchspaceMCCH is set to zero, the PDCCH monitoring occasion for MCCH message reception in the MCCH transmission window may be the same as the PDCCH monitoring occasion in the SIB 1. In a case that searchspaceMCCH is set to non-zero, the PDCCH monitoring occasion of the MCCH message may be determined based on a search space indicated by searchspaceMCCH.

MCCH information modification occurs only in a specific radio frame, and a concept of a modification period may be used. Within the modification period, the same MCCH information may be transmitted a number of times defined by the scheduling. In a case that the network modifies part or all of the MCCH information, the network may use the PDCCH scheduling the MCCH to notify the terminal apparatus of the modification from the start of the MCCH modification period. The terminal apparatus receiving the notification of the modification, in the case of receiving or interested in receiving the MBS services transmitted using the MBS broadcast, may acquire new MCCH information from the same slot that received the notification of the modification. The terminal apparatus may apply the previously acquired MCCH information until it acquires new MCCH information.

The terminal apparatus may apply an MCCH information acquisition procedure to acquire information of the MBS broadcast configuration broadcast by the network. The MCCH information acquisition procedure may be applied to an MBS broadcast service that an MBS-enabled terminal apparatus is receiving or interested in receiving, in an RRC_IDLE state, an RRC_INACTIVE state, or an RRC_CONNECTED state with a BWP in a common search space configured by searchSpaceMCCH being an active BWP.

The terminal apparatus, in the case of becoming interested in receiving the MBS broadcast services, may apply the MCCH information acquisition procedure. The terminal apparatus interested in receiving the MBS broadcast services may apply the MCCH information acquisition procedure in a case of entering the cell providing the SIB 20 (e.g., at power-on, after movement of the terminal apparatus), in a case of receiving the SIB 20 of the SCell through dedicated signaling, and in a case of being notified that the MCCH information has been modified due to the start of a new MBS service. The terminal apparatus receiving data via the broadcast MRB may apply the MCCH information acquisition procedure in a case of being notified that the MCCH information has been modified due to the MCCH information modification other than a modification due to the start of a new MBS service. Unless explicitly specified in the MCCH information acquisition procedure, the MCCH information acquisition procedure may overwrite the stored MCCH information.

In a case that the MCCH information acquisition procedure is triggered based on the notification that the MCCH information has been modified, the terminal apparatus which is receiving or interested in receiving the MBS broadcast services may start to acquire the MBSBroadcastConfiguration message transmitted by using the MCCH from the slot transmitting the notification that the MCCH information has been modified. In addition, in a case that the terminal apparatus enters a cell providing the SIB 20 or receives information included in the SIB 20 broadcasted in the SCell through RRC signalling, the terminal apparatus may start acquiring the MBSBroadcastConfiguration message transmitted using the MCCH from the next repetition period.

A broadcast MRB configuration procedure may be used for the terminal apparatus to configure the PDCP, the RLC, the MAC, and the PHY in a case that the terminal apparatus starts and/or stops receiving the broadcast MRB transmitted on the MTCH or in a case that a broadcast MRB configuration received by the terminal apparatus is changed. The broadcast MRB configuration procedure may be applied to an MBS broadcast service that an MBS-enabled terminal apparatus is receiving or interested in receiving, in an RRC_IDLE state, an RRC_INACTIVE state, or an RRC_CONNECTED state with a BWP in a common search space configured by searchSpaceMTCH or searchSpaceMCCH being an active BWP.

The terminal apparatus may apply (initiate) the broadcast MRB configuration procedure to start receiving the MBS session of the MBS broadcast service of interest. The broadcast MRB configuration procedure may be initiated in a case that an MBS-enabled terminal apparatus interested in receiving the MBS broadcast services enters a cell that provides the MBS broadcast services at the start of an MBS session, becoming interested in ongoing MBS broadcast services, is no longer blocked from receiving ongoing MBS broadcast services due to the terminal apparatus capability restriction being lifted, and the like.

The terminal apparatus may apply (initiate) a broadcast MRB release procedure to stop receiving the session of the MBS broadcast service. The broadcast MRB release procedure may be initiated in a case that an MBS session is stopped, in a case that the terminal apparatus moves away from a cell broadcasting the MBS service of interest, in a case that the terminal apparatus loses interest in the MBS service, in a case that the capability restriction is initiated that prevents reception of an associated service, and the like.

As the broadcast MRB configuration procedure, the terminal apparatus may perform the following operations.

The terminal apparatus may establish a PDCP entity, an RLC entity, and/or an SDAP entity according to the information that is about the broadcast MRB and that is included in the MBSBroadcastConfiguration message. The terminal apparatus may configure the MAC layer based on the scheduling information (mtch-SchedulingInfo) of the MTCH. The terminal apparatus may also configure the PHY layer based on the configuration applied to this broadcast MRB. The terminal apparatus may also receive the DL-SCH in the same cell as the cell in which the terminal apparatus received the MBSBroadcastConfiguration message for broadcast MRB establishment using the g-RNTI and/or mtch-SchedulingInfo for this MBS broadcast service.

As the broadcast MRB release procedure, the terminal apparatus may perform the following operations.

The terminal apparatus may release the PDCP entity, the RLC entity, and the associated MAC and PHY configurations. The terminal apparatus may release the SDAP entity having no associated MRB.

The MBS broadcast configuration message (MBSBroadcastConfiguration message) may include information (MBS session information list) indicating one or multiple MBS broadcast sessions. In addition to or instead of this, the MBS broadcast configuration message may include a list of neighbor cells providing the same broadcast MBS service. Each of entries of the MBS session information list may include identifier information for MBS broadcast session (TMGI). The TMGI may include identifier information for PLMN or a value of an index associated with the identifier information for PLMN, and in addition to or instead of this, the TMGI may include an identifier (service ID) for identifying the MBS service in the PLMN. In addition to or instead of this, the MBS session information list may include one or multiple entries, and the entries of the MBS session information list may include a G-RNTI used for scrambling scheduling and transmission of the MTCH. In addition to or instead of this, the entries of the MBS session information list may include the broadcast MRB configuration (e.g., a PDCP configuration an RLC configuration).

Based on the above description, various examples of the present embodiment will be described. Note that the processing described above may be applied to processing not described in the following.

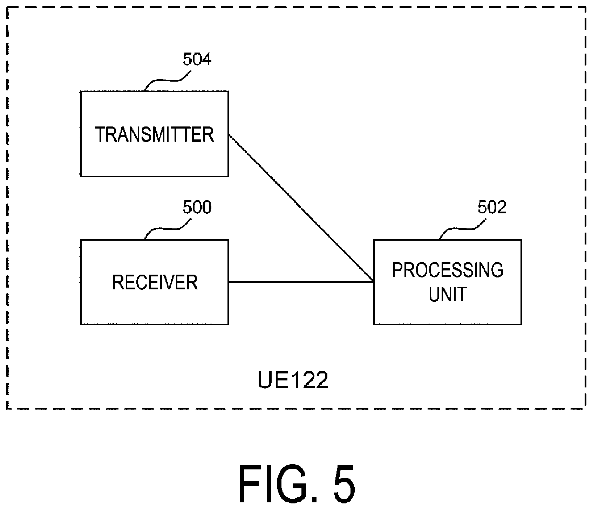

FIG. 5 is a block diagram illustrating a configuration of the terminal apparatus (UE 122) according to the present embodiment. Note that FIG. 5 illustrates only the main components closely related to the present embodiment in order to avoid complexity of description.

The UE 122 illustrated in FIG. 5 includes a receiver 500 that receives control information (DCI, MAC control element, RRC signalling, broadcast information, and the like) from the base station apparatus, a processing unit 502 that performs processing in accordance with parameters included in the received control information, and a transmitter 504 that transmits control information (UCI, MAC control element, RRC signalling, and the like) to the base station apparatus. The base station apparatus described above may be the eNB 102, or may be the gNB 108. The processing unit 502 may include a part or all of functions of various layers (for example, the physical layer, the MAC layer, the RLC layer, the PDCP layer, the SDAP layer, the RRC layer, and the NAS layer). That is, the processing unit 502 may include some or all of a physical layer processing unit (PHY processing unit), a MAC layer processing unit (MAC processing unit), an RLC layer processing unit (RLC processing unit), a PDCP layer processing unit (PDCP processing unit), an SDAP processing unit (SDAP processing unit), an RRC layer processing unit (RRC processing unit), and a NAS layer processing unit (NAS processing unit).

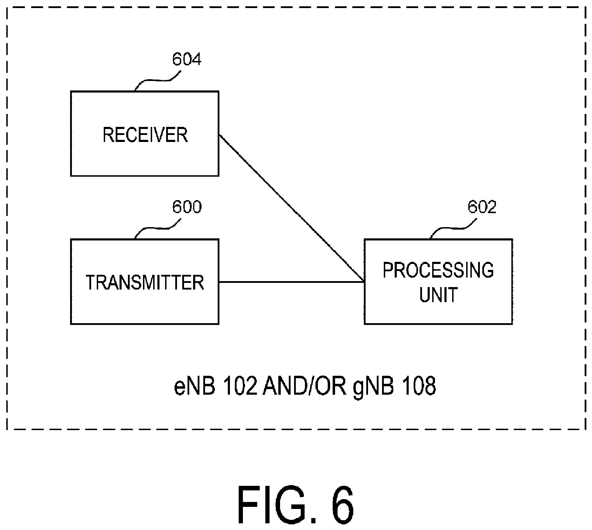

FIG. 6 is a block diagram illustrating a configuration of the base station apparatus according to the present embodiment. Note that FIG. 6 illustrates only the main components closely related to the present embodiment in order to avoid complexity of description. The base station apparatus described above may be the eNB 102, or may be the gNB 108.

The base station apparatus illustrated in FIG. 6 includes a transmitter 600 that transmits control information (DCI, RRC signalling, broadcast information, and the like) to the UE 122, a processing unit 602 that creates control information (DCI, RRC signalling including parameters, broadcast information, and the like) and transmits the control information to the UE 122 to thereby cause the processing unit 502 of the UE 122 to perform processing, and a receiver 604 that receives control information (UCI, RRC signalling, and the like) from the UE 122. The processing unit 602 may include a part or all of functions of various layers (for example, the physical layer, the MAC layer, the RLC layer, the PDCP layer, the SDAP layer, the RRC layer, and the NAS layer). In other words, the processing unit 602 may include a part or all of a physical layer processing unit, a MAC layer processing unit, an RLC layer processing unit, a PDCP layer processing unit, an SDAP processing unit, an RRC layer processing unit, and a NAS layer processing unit.

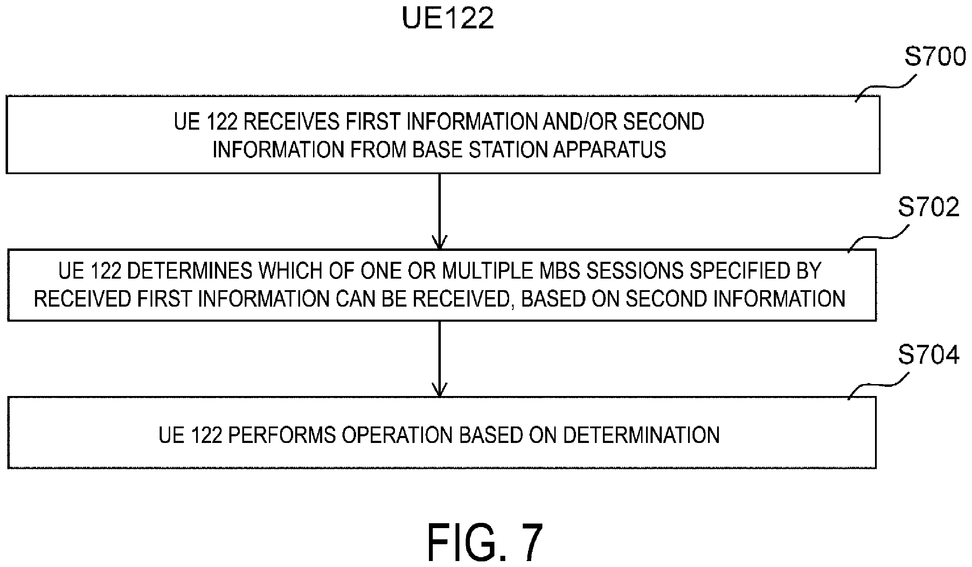

With reference to FIGS. 7 to 10, an example of processing of the terminal apparatus according to the present embodiment is described.

FIG. 7 is a diagram illustrating an example of processing of the terminal apparatus (UE 122) according to the present embodiment. The processing unit 502 of the terminal apparatus receives first information and/or second information from the base station apparatus (step S700). The processing unit 502 of the terminal apparatus determines which of one or multiple MBS sessions specified by the received first information can be received, based on the second information (step S702). The processing unit 502 of the terminal apparatus performs operation based on the determination (Step S704).

The first information received from the base station apparatus in the step S700 may be, for example, any one of the following (a) to (c) or any combination thereof.
(a) Message transmitted using the MCCH
(b) System information block (e.g., SIB 20)
(c) RRC signalling transmitted using the DCCH

For example, the message of (a) may be an MBS broadcast configuration message, or may be another message. For example, the system information block of (b) may be the SIB 20, or may be another SIB. For example, the RRC signalling of (c) may be an RRC reconfiguration message, or may be another RRC message.

The second information received from the base station apparatus in the step S700 may be, for example, any one of the following (a) to (d) or any combination thereof.
(a) A list including one or multiple entries, each entry being an area indicated by Reference Location (geographical coordinates indicated by longitude and latitude) and additional information (for example, radius, diameter, and/or angle)
(b) A list including one or multiple entries, each entry being an area formed by connecting multiple Reference points
(c) SSB index.
(d) Information indicating other geographical areas

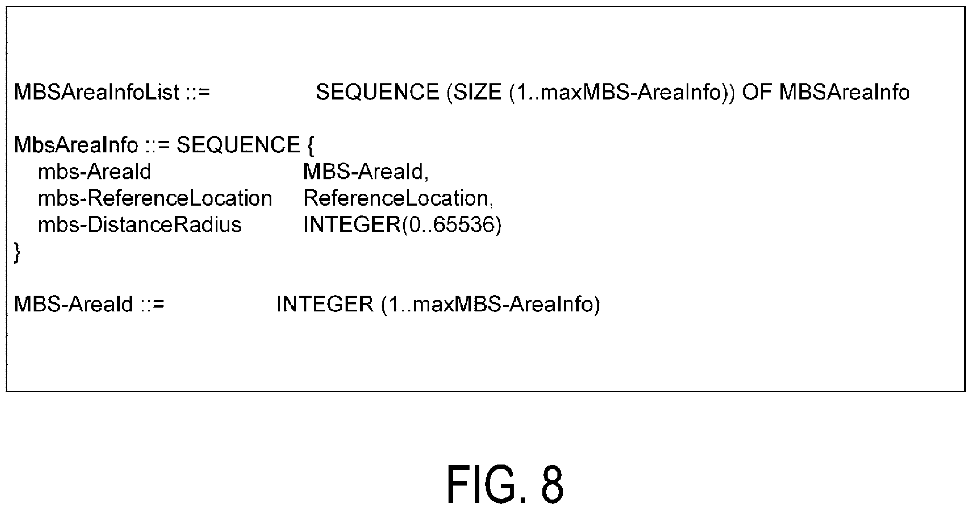

Each of the areas indicated by the entries may be identified by an identifier. In addition, the areas indicated by one or multiple entries may be defined as one area, and in this case, an identifier may be associated with the areas indicated by one or multiple entries. The identifier for identifying the area is also referred to as an area identifier. The area identifier may be included in the second information together with the entry. FIG. 8 is a diagram illustrating an example in the case of (a) described above. In FIG. 8, a list (MBSAreaInfoList) in which one entry includes the area identifier (MBS-AreaId), the Reference Location (ReferenceLocation), and the radius information (mbs-DistanceRadius) is provided from the base station apparatus to the terminal apparatus.

In addition, the area being indicated by the SSB index may mean that in a case that the terminal apparatus is able to receive the indicated SSB, the terminal apparatus is considered to be located in the area indicated by the SSB index. Being able to receive the indicated SSB may mean that the received power of the SSB is equal to or greater than (or exceeds) a certain threshold. The threshold may be announced in the first information, may be announced in the second information, or may be a predetermined value.

One or more areas announced in the second information may be associated with the MBS session(s).

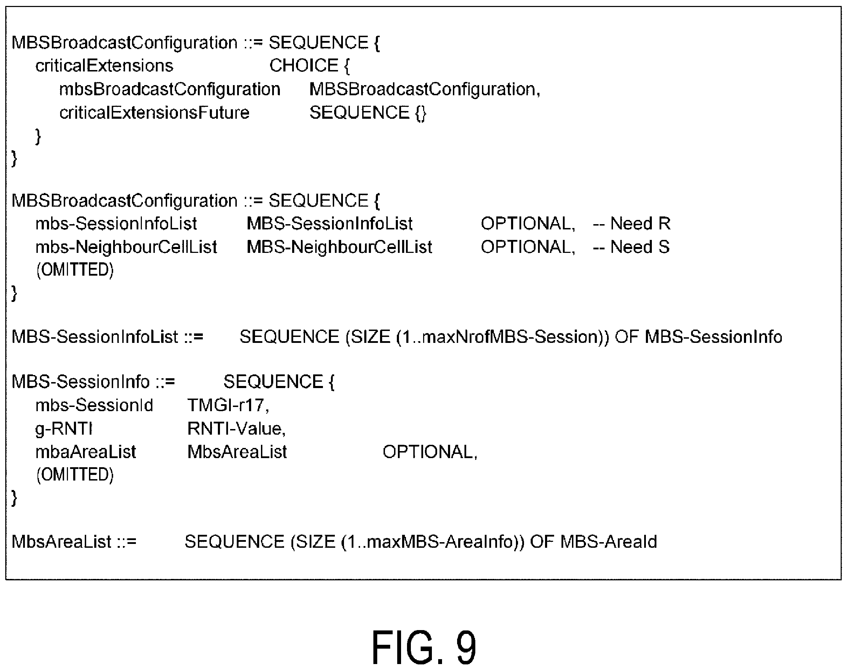

For example, zero or more areas may be associated with each of entries of the MBS session information list included in the MBS broadcast configuration message. In this case, for example, each of entries of the MBS session information list may include a list in which the entry includes zero or more area identifiers. In addition to or instead of this, the TMGI included in each of entries of the MBS session information list may be associated with zero or more areas. In addition to or instead of this, the G-RNTI included in each of entries of the MBS session information list may be associated with zero or more areas. In addition to or instead of this, the PLMN included in each of entries of the MBS session information list may be associated with zero or more areas. In addition to or instead of this, the service ID included in each of entries of the MBS session information list may be associated with zero or more areas. FIG. 9 illustrates an example of the MBS broadcast configuration message including the area identifier. The MBS broadcast configuration message (MBSBroadcastConfiguration) includes an MBS session information list (MBS-SessionInfoList), and each of entries of the MBS session information list includes the TMGI and the G-RNTI, and optionally includes a list (MbsAreaList) in which an entry includes one or multiple area identifiers. That is, an entry of the MBS session information list not including MbsAreaList may indicate that the entry is associated with zero areas.

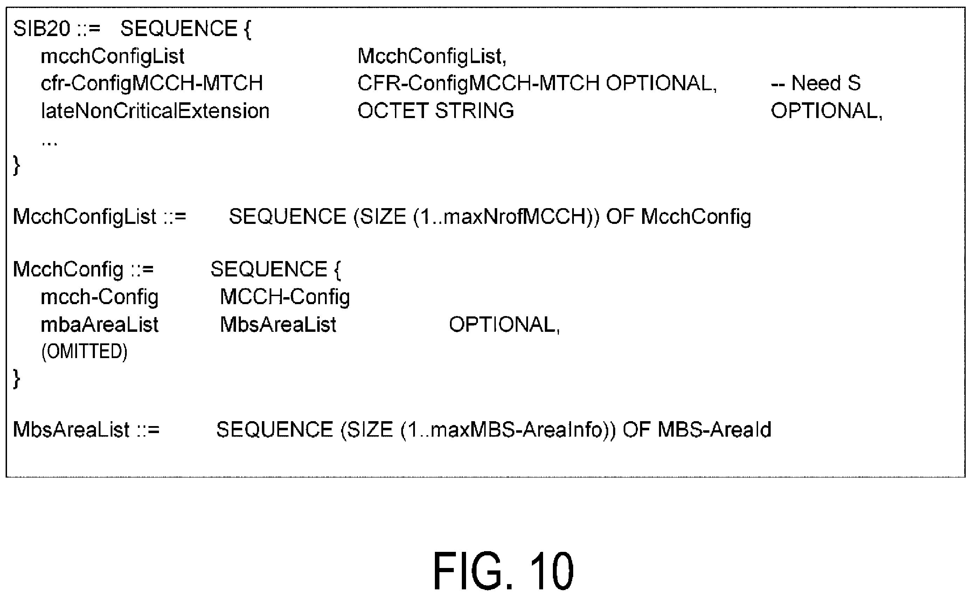

For example, the SIB 20 may include configuration information needed to receive one or multiple MCCHs, and each piece of configuration information needed to receive the MCCH may be associated with zero or more areas. In this case, all MBS sessions announced in the MBS broadcast configuration message received based on the configuration information needed to receive a certain MCCH may be associated with zero or more areas associated with the configuration information needed to receive the MCCH. FIG. 10 is a diagram illustrating an example in which the SIB 20 includes the area identifier. The SIB 20 includes a list of configuration information (McchConfigList) needed to receive one or multiple MCCHs, and each of entries of McchConfigList includes the configuration information (MCCH-Config) needed to receive the MCCH and optionally includes a list (MbsAreaList) in which an entry includes one or multiple area identifiers. That is, McchConfig not including MbsAreaList may indicate that the McchConfig is associated with zero areas.

In addition, each of the areas announced in the second information may be associated with one or multiple MBS sessions.

There may be an MBS session that is not associated with any area (i.e., associated with zero areas).

The determination in step S702 may be, for example, that the terminal apparatus determines whether the MBS session of the MBS broadcast service that the terminal apparatus is interested in receiving is not associated with any area in the cell providing the MBS broadcast services. In addition to or instead of this, the determination in step S702 may be, for example, determining whether the terminal apparatus is located in the area associated with the MBS session of the MBS broadcast service that the terminal apparatus is interested in receiving.

In step S704, the terminal apparatus may apply (initiate) the broadcast MRB configuration procedure based on the determination. For example, the terminal apparatus may apply (initiate) the broadcast MRB configuration procedure based on the fact that the MBS session of the MBS broadcast service that the terminal apparatus is interested in receiving is not associated with any area. In addition to or instead of this, for example, the terminal apparatus may apply (initiate) the broadcast MRB configuration procedure based on the fact that the terminal apparatus is located in the area associated with the MBS session of the MBS broadcast service that the terminal apparatus is interested in receiving. Based on the fact that the MBS session of the MBS broadcast service that the terminal apparatus is interested in receiving is not associated with any area, the terminal apparatus may determine that the MBS session is an MBS session that is allowed to be received (receivable). In addition to or instead of this, based on the fact that the terminal apparatus is located in the area associated with the MBS session of the MBS broadcast service that the terminal apparatus is interested in receiving, the terminal apparatus may determine that the MBS session is an MBS session that is allowed to be received (receivable). The terminal apparatus may apply (initiate) the broadcast MRB configuration procedure only to the MBS session that is allowed to be received (receivable).

In addition to or instead of this, in step S704, the terminal apparatus may apply (initiate) the broadcast MRB release procedure based on the determination. For example, the terminal apparatus may apply (initiate) the broadcast MRB release procedure based on the fact that the terminal apparatus is not located in the area associated with the MBS session of the MBS broadcast service that the terminal apparatus is receiving. Based on the fact that the terminal apparatus is not located in the area associated with the MBS session of the MBS broadcast service that the terminal apparatus is receiving, the terminal apparatus may determine that the MBS session is an MBS session that is not allowed to be received (not receivable). The terminal apparatus may apply (initiate) the broadcast MRB release procedure to the MBS session that is not allowed to be received (not receivable).

In addition to or instead of this, the terminal apparatus in the RRC_IDLE state and the RRC_INACTIVE state while camping on the frequency providing the MBS session of the MBS broadcast service that the terminal apparatus is receiving or interested in receiving may determine, in step S702, whether there is not an area associated with the MBS session of the MBS broadcast service or the terminal apparatus is located in the area associated.

In step S704, the terminal apparatus may consider, based on the determination, the frequency providing the MBS broadcast service (or the MBS session of the MBS broadcast service) that the terminal apparatus is receiving or interested in receiving as the highest priority frequency. For example, based on the fact that there is no area associated with the MBS broadcast service (or the MBS session of the MBS broadcast service) that the terminal apparatus is receiving or interested in receiving, the terminal apparatus may consider the frequency providing this MBS session as the highest priority frequency. In addition to or instead of this, for example, based on the fact that the terminal apparatus is not located the area associated with the MBS broadcast service (or the MBS session of the MBS broadcast service) that the terminal apparatus is receiving or interested in receiving, the terminal apparatus may consider the frequency providing this MBS session as the highest priority frequency.

In addition to this in step S704, the terminal apparatus may not consider, based on the determination, the frequency providing the MBS broadcast service (or the MBS session of the MBS broadcast service) that the terminal apparatus is receiving or interested in receiving as the highest priority frequency. For example, based on the fact that the terminal apparatus is not located in the area associated with the area associated with the MBS broadcast service (or the MBS session of the MBS broadcast service) that the terminal apparatus is receiving or interested in receiving, the terminal apparatus may not consider the frequency providing this MBS session as the highest priority frequency.

Note that, the MBS broadcast configuration message may independently include, as the above-described MBS session information list, the list including only the entries associated with no area and the list including the entries associated with zero or more areas. Thus, a conventional terminal apparatus that does not support the operation of the present embodiment can receive the MBS broadcast service not limited to the area by acquiring only the list including only the entries associated with no area, and the terminal apparatus that supports the operation of the present embodiment can receive both the MBS broadcast service not limited to the area and the MBS broadcast service limited to the area by acquiring both the lists.

With the above-described mechanism, the base station apparatus can provide the terminal apparatus with the MBS broadcast service through the PTM distribution in a specific area in the cell without using the PTP distribution. In addition, the terminal apparatus can receive the MBS broadcast service in an appropriate area in the cell.

In the above description, the processing unit 502 in the UE 122 may be a processing unit that performs processing of the RRC layer.

Further, the terminal apparatus may be notified of other information as the second information, instead of the information indicating the area. For example, the terminal apparatus may be notified of information on the MBS broadcast service and/or the MBS session that is allowed to be received from the network (base station apparatus). For example, the information may include information such as the G-RNTI and the service ID of the MBS session that is allowed to be received. In addition to or instead of this, the information may include information needed to decode the MBS session that is allowed to be received. In addition, the information may include information indicating a period during which the information is valid (for example, a value of a timer). The network (base station apparatus) may announce the information based on the location information announced from the terminal apparatus. In addition to or instead of this, the network (base station apparatus) may announce the information based on a report of a result of measuring a reference signal transmitted from one or multiple cells announced from the terminal apparatus. In addition to or instead of this, the network (base station apparatus) may announce the information based on other information.

In step S704, for example, the terminal apparatus may apply (initiate) the broadcast MRB configuration procedure based on the fact that the MBS session of the MBS broadcast service that the terminal apparatus is interested in receiving is not associated with any area. In addition to or instead of this, for example, the terminal apparatus may apply (initiate) the broadcast MRB configuration procedure based on the fact that the MBS session of the MBS broadcast service that the terminal apparatus is interested in receiving is an MBS broadcast service and/or an MBS session that is allowed to be received from the network (base station apparatus). Based on the fact that the MBS session of the MBS broadcast service that the terminal apparatus is interested in receiving is not associated with any area, the terminal apparatus may determine that the MBS session is an MBS session that is allowed to be received (receivable). In addition to or instead of this, based on the fact that the MBS session of the MBS broadcast service that the terminal apparatus is interested in receiving is an MBS broadcast service and/or an MBS session that is allowed to be received from the network (base station apparatus), the terminal apparatus may determine that the MBS session is an MBS session that is allowed to be received (receivable). The terminal apparatus may apply (initiate) the broadcast MRB configuration procedure only to the MBS session that is allowed to be received (receivable).

In addition to or instead of this, in step S704, for example, based on the fact that the MBS session of the MBS broadcast service that the terminal apparatus is receiving is not an MBS broadcast service and/or an MBS session that is allowed to be received from the network (base station apparatus), the terminal apparatus may apply (initiate) the broadcast MRB release procedure. Based on the fact that the MBS session of the MBS broadcast service that the terminal apparatus is receiving is not an MBS broadcast service and/or an MBS session that is allowed to be received from the network (base station apparatus), the terminal apparatus may determine that the MBS session is an MBS session that is not allowed to be received (not receivable). The terminal apparatus may apply (initiate) the broadcast MRB release procedure to the MBS session that is not allowed to be received (not receivable).

In addition to or instead of this, in step S704, for example, based on the fact that the MBS broadcast service (or the MBS session of the MBS broadcast service) that terminal apparatus is receiving or interested in receiving is an MBS broadcast service and/or an MBS session that is allowed to be received from the network (base station apparatus), the terminal apparatus may consider the frequency providing this MBS broadcast session as the highest priority frequency. In addition to or instead of this, in step S704, for example, based on the fact that the MBS broadcast service (or the MBS session of the MBS broadcast service) that terminal apparatus is receiving or interested in receiving is not an MBS broadcast service and/or an MBS session that is allowed to be received from the network (base station apparatus), the terminal apparatus may not consider the frequency providing this MBS broadcast session as the highest priority frequency.

In each embodiment, the first information and/or the second information may be announced to the terminal apparatus by any one or any combination of the RRC message, the RRC signalling, the message of the upper layer of the RRC layer, and the MAC control elements.

In the above description, expressions such as "link to", "corresponding to", "associate with", and the like may be interchangeably interpreted.

In the above description, expressions such as "determines A", "configured with A", and "includes A" may be interchangeably interpreted.

In the above description, "transition from X to Y" may be replaced with "change from X to Y". In the above description, "transition" may be interchangeably interpreted as "determine transition of".

In the example of each processing or the example of the flow of each processing in the above description, some or all of the steps may not need not be performed. In the example of each processing or the example of the flow of each processing in the above description, the order of the steps may be different from each other. In the example of each processing or the example of the flow of each processing in the above description, a part or all of the processing in each step may not need to be performed.

Note that in a case that the above description contains "C may be D" and "C may be E," this means inclusion of "D may be E." In a case that the above description contains "F may be G" and "G may be H", this may mean inclusion of "F may be H".

A program running on an apparatus according to the present embodiment may serve as a program that controls a Central Processing Unit (CPU) and the like to cause a computer to operate in such a manner as to realize the functions of the present embodiment. Programs or the information handled by the programs are temporarily loaded into a volatile memory such as a Random Access Memory (RAM) while being processed, or stored in a non-volatile memory such as a flash memory, or a Hard Disk Drive (HDD), and then read, modified, and written by the CPU, as necessary.

Note that the apparatuses in the above-described embodiment may be partially enabled by a computer. In this case, a program for implementing this control function may be implemented by recording the program in a computer-readable recording medium and causing a computer system to read and perform the program recorded in the recording medium. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically stores a program for a short period of time, such as a communication line in a case that the program is transmitted via a network such as the Internet or via a communication line such as a telephone line, and a medium that stores the program for a certain period of time, such as a volatile memory inside the computer system that is a server or a client in this case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may include a digital circuit, or may include an analog circuit. Furthermore, in a case that with advances in semiconductor technology, a circuit integration technology appears that replaces the present integrated circuits, it is also possible to use an integrated circuit based on the technology.

Note that the present embodiment is not limited to the above-described embodiments. Although apparatuses have been described as an example in the embodiment, the present embodiment is not limited to these apparatuses, and is applicable to a stationary type or a non-movable type electronic apparatus installed indoors or outdoors such as a terminal apparatus or a communication apparatus, for example, an AV device, a kitchen device, a cleaning or washing machine, an air-conditioning device, office equipment, a vending machine, and other household appliances.

Although the present embodiment has been described in detail above referring to the drawings, the specific configuration is not limited to the present embodiment and includes, for example, design changes within the scope that do not depart from the gist of the present embodiment. Furthermore, various modifications are possible within the scope of the present embodiment defined by claims, and embodiments that are made by suitably combining technical means disclosed according to the different embodiments are also included in the technical scope of the present embodiment. In addition, a configuration in which components, which are described in the embodiment described above, having similar effects are interchanged is also included.

### Industrial Applicability

An aspect of the present invention can be used, for example, in communication systems, communication equipment (for example, mobile phone devices, base station apparatus, wireless LAN devices, or sensor devices), integrated circuits (for example, communication chips), programs, and the like.

### Reference Signs List

100 E-UTRA
102 eNB
104 EPC
106 NR
108 gNB
110 5GC
112, 114, 116, 118, 120, 124 Interface
122 UE
200, 300 PHY
202, 302 MAC
204, 304 RLC
206, 306 PDCP
208, 308 RRC
310 SDAP
210, 312 NAS
500, 604 Receiver
502, 602 Processing unit
504, 600 Transmitter

## Claims

1. A terminal apparatus for communicating with a base station apparatus, the terminal apparatus comprising:
a receiver configured to receive control information about one or multiple multicast broadcast services (MBSs) provided in a cell of the base station apparatus and one or multiple pieces of area information; and
a processing unit, wherein
the control information includes information associating some or all of MBS sessions with the one or multiple pieces of area information,
each piece of the area information is information indicating some or all of areas of the cell, and
the processing unit
determines that, among one or multiple of the MBS sessions, an MBS session not associated with any piece of the area information and an MBS session associated with the area information indicating an area where the terminal apparatus is located are MBS sessions allowed to be received, and
performs a broadcast MRB configuration procedure to start receiving an MBS session of the MBS sessions determined to be allowed to be received.

2. A method applied to a terminal apparatus for communicating with a base station apparatus, the method comprising:
receiving control information about one or multiple multicast broadcast services (MBSs) provided in a cell of the base station apparatus and one or multiple pieces of area information, wherein
the control information includes information associating some or all of MBS sessions with the one or multiple pieces of area information,
each piece of the area information is information indicating some or all of areas of the cell,
among one or multiple of the MBS sessions, an MBS session not associated with any piece of the area information and an MBS session associated with the area information indicating an area where the terminal apparatus is located are determined to be MBS sessions allowed to be received, and
a broadcast MRB configuration procedure is performed to start receiving an MBS session of the MBS sessions determined to be allowed to be received.

3. An integrated circuit mounted on a terminal apparatus for communicating with a base station apparatus, the integrated circuit causing the terminal apparatus to perform:
a function of receiving control information about one or multiple multicast broadcast services (MBSs) provided in a cell of the base station apparatus and one or multiple pieces of area information, wherein
the control information includes information associating some or all of MBS sessions with the one or multiple pieces of area information,
each piece of the area information is information indicating some or all of areas of the cell,
among one or multiple of the MBS sessions, an MBS session not associated with any piece of the area information and an MBS session associated with the area information indicating an area where the terminal apparatus is located are determined to be MBS sessions allowed to be received, and
a broadcast MRB configuration procedure is performed to start receiving an MBS session of the MBS sessions determined to be allowed to be received.
